# EUROPEAN PATENT SPECIFICATION

(11) **EP 2 236 783 B1**
(45) Date of publication and mention of the grant of the patent: **09.05.2012**
(21) Application number: 10250532.8
(22) Date of filing: 22.03.2010
(51) Int. Cl.: F01N 3/022, F01N 3/035, F01N 3/28

(54) **Method of manufacturing exhaust gas purification device**
Verfahren zur Herstellung einer Abgasreinigungsvorrichtung
Procédé de fabrication d'un dispositif de purification de gaz d'échappement

(30) Priority: 24.03.2009 JP 2009072917
(43) Date of publication of application: 06.10.2010
(73) Proprietor: NGK Insulators, Ltd., Aichi Pref. 467-8530 (JP)
(72) Inventor: Yamada, Toshio, Nagoya City Aichi-ken, 467-8530 (JP); Morita, Yukihara, Nagoya City Aichi-ken, 467-8530 (JP)
(74) Representative: Paget, Hugh Charles Edward

(56) References cited:
- EP-A1- 1 666 118
- EP-A2- 1 312 776
- EP-A2- 1 375 849
- EP-A2- 1 598 534
- JP-A- 2001 205 108
- JP-A- 2004 108 331
- US-A- 4 519 820

## Description

### Field of the Invention

The present invention relates to a method of manufacturing an exhaust gas purification device , particularly to a method of manufacturing an exhaust gas purification device capable of providing a honeycomb catalyst body in which a catalyst is carried on the surface of partition walls in cells and the catalyst hardly penetrates inside the partition walls.

### Background of the Invention

There has been increasingly a need for removing particulate matters in an exhaust gas discharged from internal combustion engines such as an engine for automobile, an engine for construction machine or a stationary engine for industrial machine, and other burning appliances in consideration of an influence on environment. So, honeycomb filters made from ceramic are widely employed as the filter for removing particulate matters (Diesel Particulate Filter: DPF). As the DPF, for example, there is employed one having a structure in which porous partition walls separating and forming a plurality of cells serving as fluid flow passages are provided, and prescribed cells opened at one-end face and plugged at the other-end face (the prescribed cell) and residual cells plugged at one-end face and opened at the other-end face (the residual cell) are alternately disposed. Then, when it is used, a fluid (exhaust gas) is made to flow in from the other-end face having opened residual cells of DPF, the inflowing exhaust gas is made to pass through the partition walls to flow out into the prescribed cells as a passed fluid, the passed fluid is made to flow out from the one-end portion having the opened prescribed cells, and thereby particulate matters in the exhaust gas are collected and removed with the partition walls.

Usually, DPF is continuously used while regenerated by combusting and removing of the collected particulate matters. The combustion reaction of the particulate matters is, usually, accelerated by a catalyst carried on DPF.

The catalyst was carried onto the DPF, conventionally, after forming plugged portions in both end portions of a honeycomb formed body (see, for example, Patent Document 1).

Further, a honeycomb filter, in which two honeycomb formed bodies each having plugged portions only in one-end face are joined in series and a catalyst is carried inside cells and the like, is disclosed (see, for example, Patent Document 2).

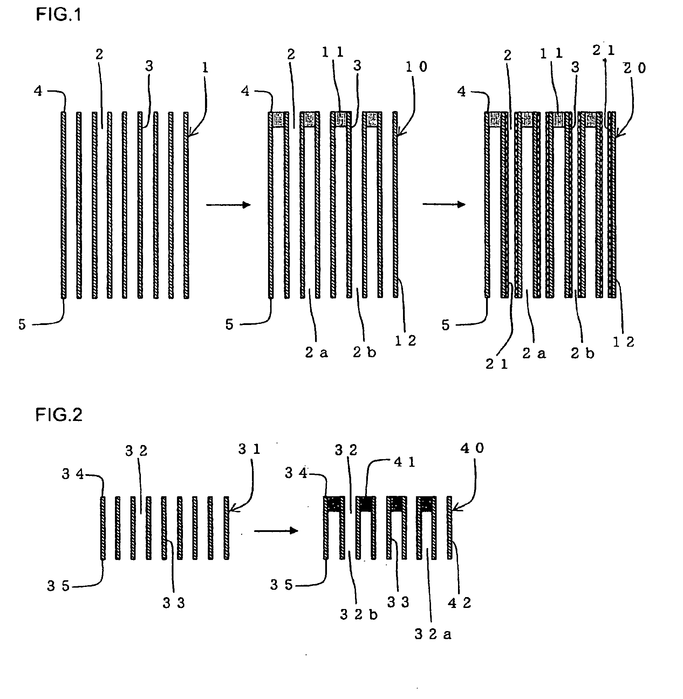

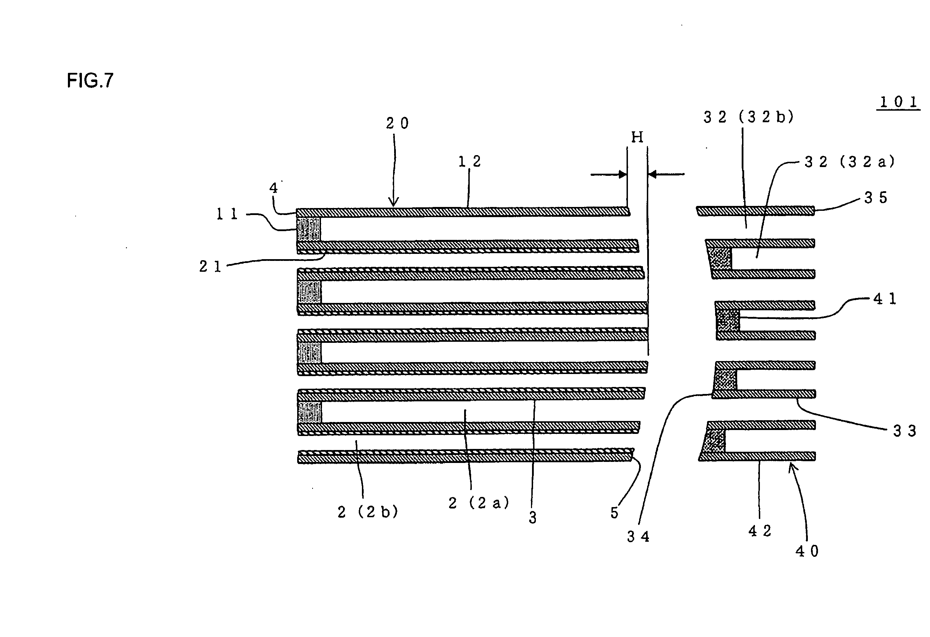

[Patent Document 1] JP-A-S62-247111
[Patent Document 2] JP-A-2004-251137
EP-A-1375849 describes a ceramic honeycomb filter having two honeycomb structures bonded to each other in the flow direction. At the downstream end of the upstream honeycomb structure, some of the honeycomb cells are plugged, while others are open. The downstream honeycomb structure has, at its downstream end, plugs in some of its cells with other cells open. The plugs of the upstream honeycomb structure are aligned with the open cells of the downstream structure, and vice versa (Fig. 1 (b)). Also shown are structures in which, at the joined interface of the two honeycomb structures, plugs are inserted into both structures (Fig. 7(d)) or bonding material enters cells of both honeycomb structures (Fig. 7(e)).
EP-A-1666118 shows a ceramic honeycomb filter having two ceramic honeycomb structures, which are bonded together in the direction of flow. Plugs in some cells of one honeycomb structure are bonded to plugs in the opposed end of the other structure.

### Summary of the Invention

In the method described in Patent Document 1, there is such a problem that it is difficult to carry a catalyst, because both end faces of a honeycomb formed body made from ceramic are plugged. Methods of carrying the catalyst in a state that both end portions are plugged include, for example, a method of carrying the catalyst on the honeycomb formed body by making catalyst slurry flow in from the other-end face side while performing suction from the one-end face side of the honeycomb formed body. In this case, the catalyst slurry flows into cells opened at the other-end face, permeates into the porous partition walls and moves into cells opened at the one-end face by the suction from the one-end face side, and flows through cells opened at the one-end face and is discharged from the one-end face side. Moreover, when the catalyst slurry permeates into the porous partition walls, the catalyst component is deposited on the partition wall surface and in the pores formed in the partition walls, and thereby the catalyst is carried on the honeycomb formed body. According to the method, however, since the catalyst slurry is made to permeate the partition walls by suction, a large amount of catalyst component is carried (deposited) also in the pores of the partition wall. Most of the particulate matters to be combusted and removed by the catalyst deposit on the partition wall surface, and, therefore, the catalyst depositing in the pores of the partition walls cannot contact with the particulate matters and scarcely contribute to the combustion of the particulate matters. Consequently, when a catalyst is carried on a honeycomb formed body by this method, there is such a problem that the contact efficiency between the catalyst and the particulate matters lowers. Although a method can be also considered in which the catalyst slurry is made to flow in from one-end face side and, after that, excess catalyst slurry not having been carried is sucked and removed with a thin tube inserted from the same end face side, but it is not practical because a large labor is necessary.

In Patent Document 2, no specific method of carrying a catalyst is disclosed.

The present invention has been made in view of problems of prior arts, and is characterized by providing a method of manufacturing an exhaust gas purification device capable of providing a honeycomb catalyst body in which a catalyst is carried on the partition wall surface in cells and the catalyst hardly penetrates inside the partition walls, and whichhasmore excellent durability.

According to the present invention, there is provided the method of manufacturing an exhaust gas purification device set out in claim 1.

Preferably the honeycomb catalyst body has the other-end face of convexly or concavely curved surface, the second one side-plugged honeycomb structure has the end face of concavely or convexly curved surface of a shape complementary to the convexly or concavely curved surface of the other-end face of the honeycomb catalyst body in the end face on the side to be contacted closely to the other-end face of the honeycomb catalyst body, and when the end face of the second one side-plugged honeycomb structure and the other-end face of the honeycomb catalyst body are contacted closely in the step of housing the honeycomb catalyst body and the second one side-plugged honeycomb structure in the can, the other-end face of convexly or concavely curved surface of the honeycomb catalyst body is contacted closely to the end face of concavely or convexly curved surface of the second one side-plugged honeycomb structure so as to be closely contacted wholly.

Preferably the length of the second one side-plugged honeycomb structure in the central axis direction is 10 mm or more, and is 40% or less relative to the total length in the central axis direction when the end face of the second one side-plugged honeycomb structure is contacted closely to the other-end face of the honeycomb catalyst body.

Preferably cordierite is used as the material of the honeycomb basal body of the honeycomb catalyst body, and SiC or aluminum titanate is used as the material of the honeycomb basal body of the second one side-plugged honeycomb structure.

Preferably the method further includes the step of forming a one side-plugged honeycomb structure, wherein a plugged honeycomb formedbody provided with a honeycomb basal body having partition walls separating and forming a plurality of cells which extend from one-end face to the other-end face and serve as a fluid flowpassage, and with plugging materials disposed to opening portions of the prescribed cells in the one-end face of the honeycomb basal body and to opening portions of the residual cells in the other-end face of the honeycomb basal body is fired to form a plugged honeycomb structure, and the plugged honeycomb structure is cut in a plane perpendicular to the central axis to form a first one side-plugged honeycomb structure in which a plurality of first plugged portions are formed only in one-end face and a second one side-plugged honeycomb structure in which a plurality of second plugged portions are formed only in one-end face; or a plugged honeycomb formed body provided with a honeycomb basal body having partition walls separating and forming a plurality of cells which extend from one-end face to the other-end face and serve as a fluid flow passage, and with plugging materials disposed to opening portions of the prescribed cell in the one-end face of the honeycomb basal body and to opening portions of the residual cells in the other-end face of the honeycomb basal body is cut in a plane perpendicular to the central axis, a first one side-plugged honeycomb formed body in which first plugging materials are disposed only to one-end face and a second one side-plugged honeycomb formed body in which second plugging materials are disposed only to one-end face are formed, and the first one side-plugged honeycomb formed body and the second one side-plugged honeycomb formed body are fired to form a first one side-plugged honeycomb structure in which first plugged portions are formed only in one-end face and a second one side-plugged honeycomb structure in which second plugged portions are formed only in one-end face.

In the method of manufacturing an exhaust gas purification device of the present invention, by making catalyst slurry flow into the cells in which the first plugged portions are not formed and both end portions are opened (the residual cells) from one-end face side of the first one side-plugged honeycomb structure to coat the catalyst on the partition wall surface in the residual cells in which both end portions are opened. Therefore, it is possible to prevent the catalyst slurry from permeating into the porous partition walls, and to make almost all the catalyst deposit on the surface of the partition walls in cells. Since both end portions of the cells (the residual cells) to which the catalyst is to be coated are opened, it is possible to make the catalyst slurry flow in so as to pass only through the cell in which both end portions are opened, and to prevent the catalyst slurry from permeating into the partition walls so as not to penetrate in cells in which the first plugged portions are formed. When the catalyst slurry permeates into the partition walls, the catalyst deposits in pores of the partition walls, and, therefore, the permeation of the catalyst through the partition walls can be prevented. According to the method of manufacturing an exhaust gas purification device of the present invention, the deposition of the catalyst in pores of the partition walls can be prevented.

Further, in the method of manufacturing an exhaust gas purification device of the present invention, respective end faces of the honeycomb catalyst body and the second one side-plugged honeycomb structure are contacted closely so that cells of the honeycomb catalyst body in which both end portions are opened are arranged on the extension of cells of the second one side-plugged honeycomb structure in which the second plugged portions are formed. Therefore, as a whole, a honeycomb filter is formed in which exhaust gas flowing in from the cells opening portions in one-end face permeates through the partition walls to penetrate in cells opened at the other-end face, and, purified gas from which particulate matters have been removed by the partition walls passes through the cells opened at the other-end face and is discharged from the cells opening portion in the other-end face. In the case of a honeycomb catalyst body in which a catalyst is carried in a state where the plugged portions are formed only in one-end face, when trying to form the plugged portions on the other-end face side, since the temperature upon firing the pluggedportions on the other-end face side must be set to a temperature that does not deteriorate the catalyst, pluggedportions that must be fired at a high temperature cannot be disposed. In contrast, in the method of manufacturing an exhaust gas purification device of the present invention, since the second one side-plugged honeycomb structure is produced separately from the honeycomb catalyst body, the plugged portions of the second one side-plugged honeycomb structure can be formed by firing at a high firing temperature (higher than a temperature that deteriorates the catalyst). Consequently, an exhaust gas purification device can be manufactured in which the plugged portions having excellent heat resistance is formed for both the honeycomb catalyst body and the second one side-plugged honeycomb structure.

### Brief Description of the Drawings

Fig. 1 is a schematic view showing a part of a manufacturing process of a method of manufacturing an exhaust gas purification device which is not within the present invention;
Fig. 2 is a schematic view showing a part of a manufacturing process of another method of manufacturing an exhaust gas purification device which is not within the present invention;

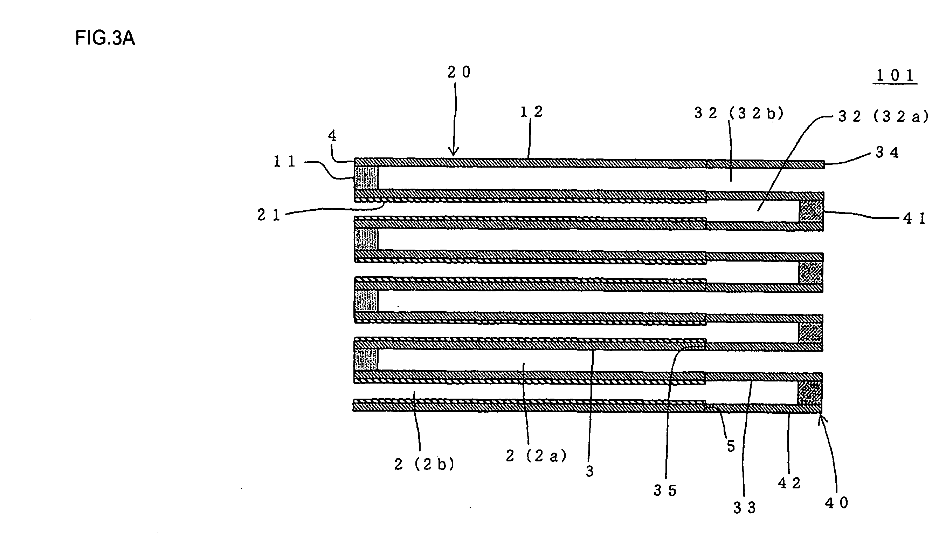

Fig. 3A is a schematic view showing a cross-section parallel to the central axis, of a honeycomb catalyst body and a second one side-plugged honeycomb structure constituting an exhaust gas purification device manufactured by a method of manufacturing an exhaust gas purification device herein described, not within the present invention;

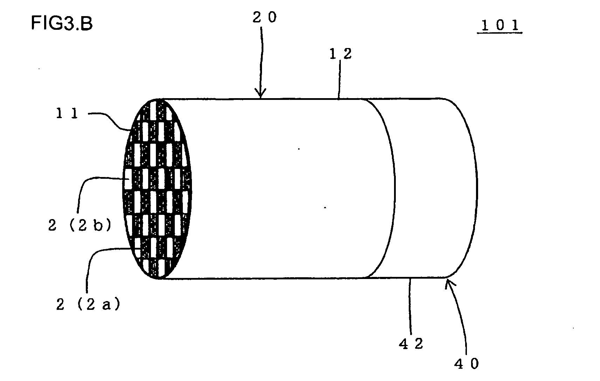

Fig. 3B is a perspective view schematically showing a honeycomb catalyst body and a second one side-plugged honeycomb structure constituting an exhaust gas purification device manufactured by a method of manufacturing an exhaust gas purification device herein described, not within the present invention;

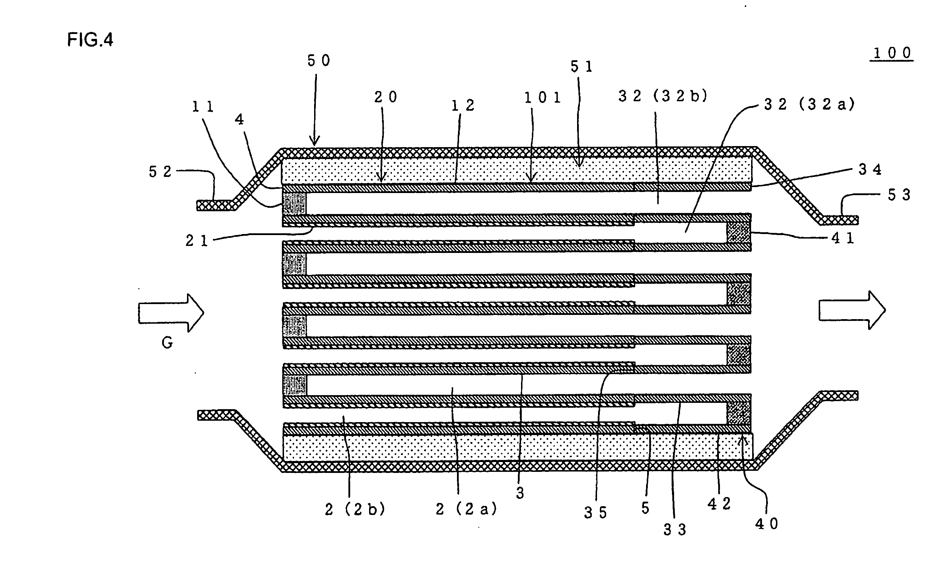

Fig. 4 is a schematic view showing a cross-section parallel to the central axis, of an exhaust gas purification device manufactured by a method of manufacturing an exhaust gas purification device not within the present invention;

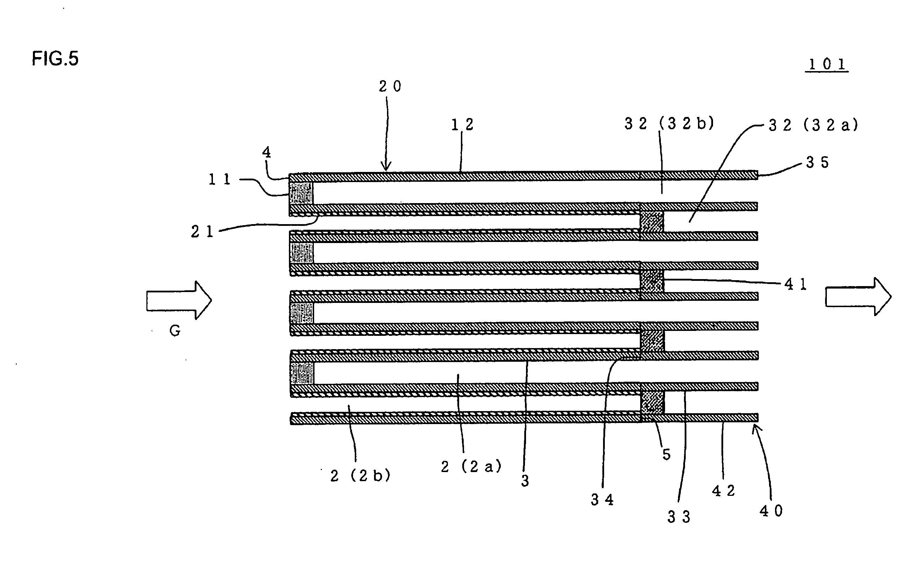

Fig. 5 is a schematic view showing a cross-section parallel to the central axis, of the honeycomb catalyst body and the second one side-plugged honeycomb structure constituting an exhaust gas purification device manufactured by another method of manufacturing an exhaust gas purification device herein described, not within the present invention;

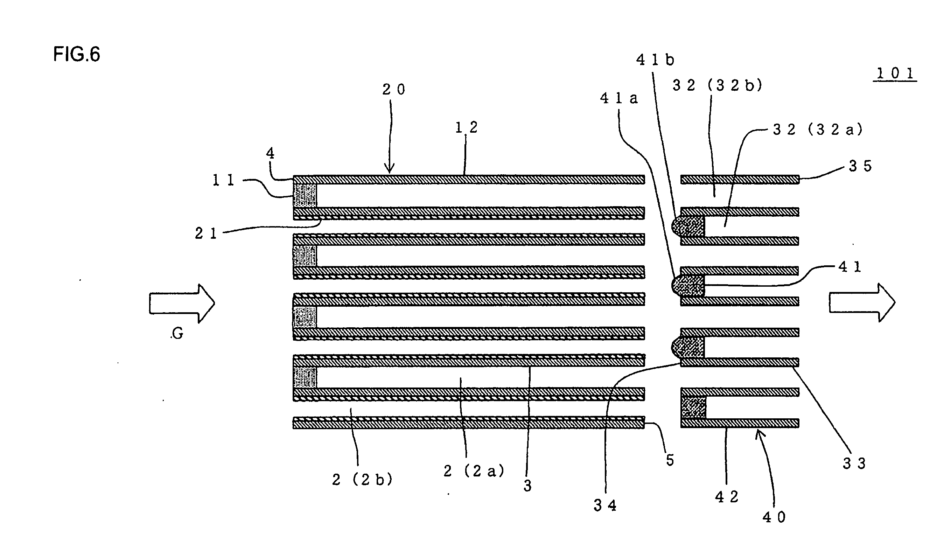

Fig. 6 is a schematic view showing a cross-section parallel to the central axis, of the honeycomb catalyst body and the second one side-plugged honeycomb structure constituting an exhaust gas purification device manufactured by an embodiment of the method of manufacturing an exhaust gas purification device of the present invention;
Fig. 7 is a schematic view showing a cross-section parallel to the central axis, of the honeycomb catalyst body and the second one side-plugged honeycomb structure constituting an exhaust gas purification device manufactured by furthermore another method of manufacturing an exhaust gas purification device of not within the present invention;

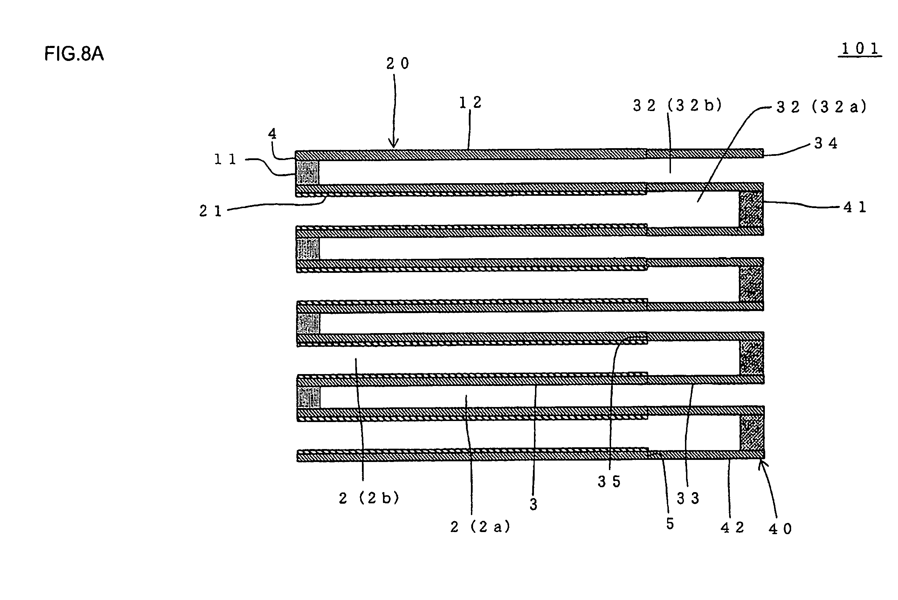

Fig. 8A is a schematic view of a cross-section parallel to the central axis, of the honeycomb catalyst body and the second one side-plugged honeycomb structure constituting an exhaust gas purification device manufactured by yet another method of manufacturing an exhaust gas purification device not within the present invention;

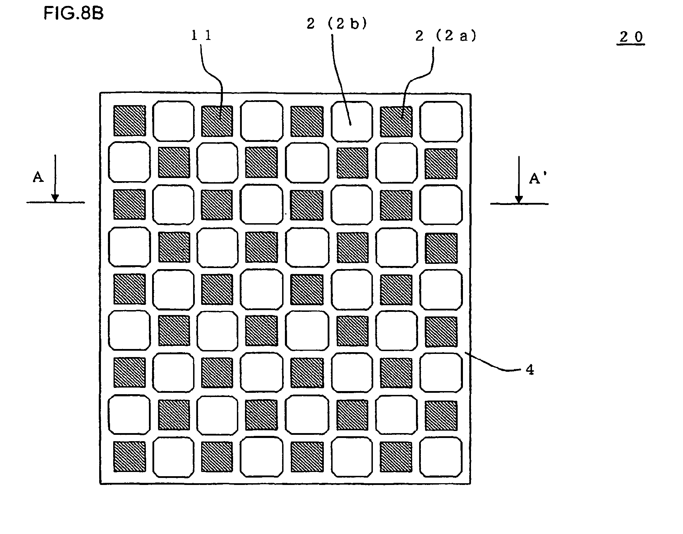

Fig. 8B is a plan view schematically showing a one-end face of the honeycomb catalyst body constituting an exhaust gas purification device manufactured by another method of manufacturing an exhaust gas purification device not within the present invention; and

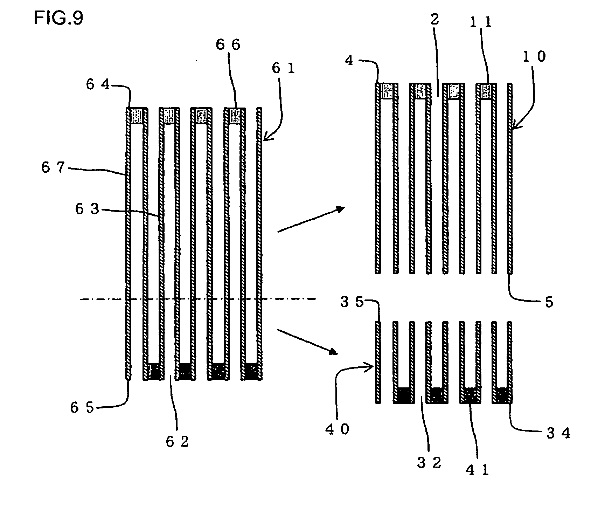

Fig. 9 is a schematic view showing a part of the manufacturing process in the methods of manufacturing an exhaust gas purification device herein described.

### Detailed Description of Preferred Embodiment

Hereinafter, embodiments for carrying out the present invention will be described referring to the drawings, but it should be understood that the present invention is not limited to embodiments below.

(1) The method of manufacturing an exhaust gas purification device:
   As shown in Figs. 1 to 4, a method of manufacturing an exhaust gas purification device described here for reference has the steps of forming a honeycomb catalyst body 20 by making catalyst slurry flow in from one-end face 4 side of a first one side-plugged honeycomb structure 10 provided with a honeycomb basal body 12 having porous partition walls 3 containing ceramic as the main component and separating and forming a plurality of cells 2 which extend from one-end face 4 to the other-end face 5 and serve as a fluid flow passage, and with the first plugged portions 11 disposed at opening portions of the prescribed cells 2a in one-end face 4 of the honeycomb basal body 12, in the residual cells 2b in which the first plugged portions 11 are not formed and both end portions are opened to coat a catalyst on the surface of the partition walls 3 in the residual cells 2b in which both end portions are opened; and housing the honeycomb catalyst body 20 and a second one side-plugged honeycomb structure 40 in a can 50 (canning step), the second one side-plugged honeycomb structure 40 being provided with a honeycomb basal body 42 having porous partition walls 33 containing ceramic as the main component and separating and forming a plurality of cells 32 which extend from one-end face 34 to the other-end face 35 and serve as fluid flow passage, and with second plugged portions 41 disposed at opening portions of the prescribed cells 32a in the one-end face 34 of the honeycomb basal body 42, so that the residual cells 2b in which both end portions are opened in the honeycomb catalyst body 20 are arranged on the extension of the prescribed cells 32a in which the second plugged portions 41 are formed in the second one side-plugged honeycomb structure 40, and that the prescribed cells 2a in which the first plugged portions 11 are formed in the honeycomb catalyst body 20 are arranged on the extension of the residual cells 32b in which both end portions are opened in the second one side-plugged honeycomb structure 40, and in such a state that the end face (the other-end face 35) of the second one side-plugged honeycomb structure 40 is contacted closely to the other-end face 5 of the honeycomb catalyst body 20. Hereinafter, respective processes are explained.

### (1-1) Step of forming a honeycomb catalyst body:

The step of forming a honeycomb catalyst body is a step of forming a honeycomb catalyst body 20 by making catalyst slurry flow in the residual cells 2b in which the firstpluggedportions 11 are not formed and both end portions are opened, from the one-end face 4 side of the first one side-plugged honeycomb structure 10 to coat a catalyst on the surface of the partition walls 3 in the residual cells 2b in whichboth endportions are opened. As described above, by making the catalyst slurry flow in "cells in which the first plugged portions 11 are not formed and both end portions are opened (residual cells 2b) " from the one-end face 4 side of the first one side-plugged honeycomb structure 10, the catalyst is coated on the surface of the partition walls 3 of the residual cells 2b in which both end portions are opened. Therefore, the permeation of the catalyst slurry through the porous partition walls 3 are prevented, and most of the catalyst can be deposited on the surface of the partitionwalls 3 in the cells (the residual cells 2b) . Since both end portions of the cells (the residual cells 2b) to be coated with the catalyst are opened, it is possible to make the catalyst slurry flow in so as to pass through only in the cells (the residual cells 2b) inwhichbothendportions are opened, and to prevent the catalyst slurry from permeating through the partition walls 3 so as not to penetrate in the cells (the prescribed cells 2a) in which the first plugged portions 11 are formed. If the catalyst slurry permeates through the partition walls 3, the catalyst deposits in the pore of the partition walls 3, but, according to the method of manufacturing an exhaust gas purification device of the embodiment capable of preventing the permeation of the catalyst through the partition walls 3, the deposition of the catalyst in the pores of the partition walls 3 can be prevented. In the exhaust gas purification device manufactured by this method , since the deposition of the catalyst in the pores of the partition walls 3 can be prevented and the catalyst can be carried on the surface of the partition walls 3, when the collected particulate matters are combusted and removed, the contact efficiency between the catalyst and the particulate matters is high and the particulate matters can be effectively combusted.

The first one side-plugged honeycomb structure 10 for use in the honeycomb catalyst body forming step is preferably produced as described below. That is, as shown in Fig. 1, it is preferable to produce the first one side-plugged honeycomb structure 10 having the first plugged portions 11 in the one-end face 4 by forming a first honeycomb formed body 1 having the partition walls 3 separating and forming a plurality of cells 2 which extend from one-end face 4 to the other-end face 5 and serve as a fluid flow passage by extrusion forming, filling up the first plugging materials to the opening portions of the prescribed cells 2a in the one-end face 4 of the first honeycomb formed body 1, and firing the first honeycomb formed body 1 in which the first plugging materials are filled up. It is also possible to fill up first plugging members after firing the first honeycomb formed body 1, and to carry out firing further.

A method of extrusion-forming the first honeycomb formed body 1 is not particularly limited, but, for example, it is preferable firstly to knead a raw forming material to give a kneaded clay, and then to form the obtained kneaded clay into a honeycomb shape. A method of kneading the raw forming material to form the kneaded clay is not particularly limited, and, for example, methods using a kneader, a vacuum auger machine or the like can be mentioned. Then, the kneaded clay is extrusion-formed to form the honeycomb formed body. The extrusion-forming is preferably carried out using a die having an intended cell shape, partition wall thickness and cell density. As the material of the die, cemented carbide hardly worn away is preferable.

The raw forming material is preferably prepared by adding a dispersion medium and additive to a raw ceramic material. As the additive, an organic binder, a pore former, a surfactant and the like canbementioned. As the dispersion medium, water and the like can be mentioned.

The raw ceramic material is preferably at least one kind selected from the group consisting of silicon carbide, a silicon-silicon carbide based composite material, a cordierite forming raw material, mullite, alumina, spinel, a silicon carbide-cordierite based composite material, lithium aluminum silicate and aluminum titanate. Among these, the cordierite forming raw material having a small thermal expansion coefficient and excellent thermal shock resistance is preferable. The content of the raw ceramic material is preferably 30 to 95 mass% relative to the total raw forming material.

As the organic binder, methyl cellulose, hydroxypropoxyl cellulose, hydroxyethyl cellulose, carboxymethyl cellulose, polyvinyl alcohol and the like can be mentioned. Among these, the combined use of methyl cellulose andhydroxypropoxyl cellulose is preferable. The content of the binder is preferably 2 to 20 mass% relative to the total raw forming material.

The pore former is not particularly limited as long as it forms a pore after the firing, and, for example, starch, resin balloon, water-absorbing resin, silica gel and the like can be mentioned. The content of the pore former is preferably 0 to 20 mass% relative to the total raw forming material.

As the surfactant, ethylene glycol, dextrin, fatty acid soap, polyalcohol and the like are usable. These may be used in one kind alone, or in two or more kinds in combination. The content of the surfactant is preferably 0 to 5 mass% relative to the total raw forming material.

The content of the dispersion medium is preferably 5 to 50 mass% relative to the total raw forming material.

By adjusting the particle diameter and blending amount of the raw ceramic material (aggregate particles) to be used, and the particle diameter and blending amount of the pore former to be added, a porous basal body having an intended porosity and average pore diameter can be obtained.

Next, the obtained first honeycomb formed body 1 may be dried. The drying method is not particularly limited, and, for example, hot-air drying, microwave drying, dielectric drying, reduced-pressure drying, vacuum drying, freeze drying and the like can be mentioned. Among these, dielectric drying, microwave drying or hot-air drying is preferably carried out separately or in combination. Drying conditions are preferably set to a drying temperature of 30 to 150°C and a drying time of 1 minute to 2 hours.

Next, the first plugging materials are filled up in the opening portions of the prescribed cells 2a in the one-end face 4 of the obtained first honeycomb formed body 1. when the first plugging materials are filled up in the opening portions of the prescribed cells 2a, for example, firstly a mask is provided for the one-end face 4 of the first honeycomb formed body 1 in a checked pattern so as to block the opening portion of residual cells 2b. The mask may be provided not in a checked pattern. Additionally, the first plugging materials in slurry containing a raw ceramic material, water or alcohol, and an organic binder is stored in a storage vessel. The raw ceramic material is preferably the same as the raw ceramic material used for forming the first honeycomb formed body 1. The content of the raw ceramic material is preferably 70 to 90 mass% of the total first plugging material. The content of water or alcohol is preferably 10 to 30 mass% of the total first plugging material, and the content of the organic binder is preferably 0.1 to 2.0 mass% of the total first plugging material. As the organic binder, hydroxypropoxylmethyl cellulose, methyl cellulose and the like are mentioned. Then, the one-end face 2a side for which the mask is provided is dipped in the storage vessel to fill up the first plugging materials in "the opening portions of the prescribed cells 2a" for which no mask is provided. The viscosity of the first plugging material is preferably set to 600 to 1200 Pa · s. Incidentally, the viscosity of the plugging material is a value measured with a rotational viscometer at a temperature of 30°C and a rotation number of 30 rpm.

Next, the first honeycomb formed body 1 in which the first plugging materials are filled up in "the opening portions of the prescribed cells" in the one-end face 4 is preferably dried. The method of drying is also not particularly limited, and, for example, such a well-known drying method as hot-air drying, microwave drying, dielectric drying, reduced-pressure drying, vacuum drying or freeze drying can be employed. Among these, from the standpoint of capability of quickly and uniformly drying the whole first honeycomb formed body 1, a drying method combining hot-air drying, and microwave drying or dielectric drying is preferable.

Next, calcination prior to the firing of the first honeycomb formed body 1 in which the first plugging materials are filled up in the opening portions of the prescribed cells 2a in the one-end face 4 is preferable. The "calcination" means an operation of combusting and removing organic substances (such as the organic binder, dispersing agent or pore former) in the honeycomb formed body. Generally, since the combustion temperature of the organic binder is around 100 to 300°C, and the combustion temperature of the pore former is around 200 to 800°C, the calcination temperature may be set to around 200 to 1000°C. The calcination time is not particularly limited, and, usually, is around 10 to 100 hours.

Next, preferably the first honeycomb formed body 1 in which the first plugging materials are filled up is fired to produce the first one side-plugged honeycomb structure 10 having the first plugged portions 11 in the one-end face 4. In the present invention, the "firing" means an operation of sintering and densifying the honeycomb formed body and plugging slurry to obtain a prescribed strength. The firing temperature can appropriately be determined depending on the material of the first honeycomb formed body 1 and the material of the first plugged portions. For example, when the material of the first honeycomb formed body 1 and the material of the first plugged portions are cordierite, the firing temperature is preferably 1380 to 1450°C, and more preferably 1400 to 1440°C. This can make the first plugged portions fused to bond forming to the partition walls of the honeycomb formed body. The firing time is preferably around 3 to 10 hours. Further, when the material of the first honeycomb formed body 1 and the material of the first plugged portions are silicon carbide, the firing temperature is preferably 1200 to 1600°C, and more preferably 1300 to 1500°C. This can make the first plugged portions fused to bond forming to the partition walls of the honeycomb formed body. The firing time is preferably around 1 to 20 hours.

After producing the first one side-plugged honeycomb structure 10 by the above method, the catalyst slurry is made to flow in the residual cells 2b in which the first plugged portions 11 are not formed and both end portions are opened from the one-end face 4 side of the first one side-plugged honeycomb structure 10, and a catalyst 21 is coated on the surface of the partition walls 3 in the residual cells 2b in which both end portions are opened, to form the honeycomb catalyst body 20. Since the catalyst slurry is permeated in cells in which both end portions are opened, no catalyst slurry permeates through the partition walls. Therefore, the honeycomb catalyst body 20 has a small amount of the catalyst penetrating in pores formed in the partition walls.

The catalyst amount carried in the pores of the partition walls is preferably 0 to 35 mass% of the total catalyst amount carried on the honeycomb catalyst body, and more preferably 0 to 25 mass%. When it is more than 35 mass%, the contact efficiency between the particulate matters collected from the exhaust gas and the catalyst occasionally lowers. Regarding the catalyst carried in the pores of the partition walls, a smaller amount is preferable, but, practically, 5 mass% is the lower limit.

The method of coating (carrying) the catalyst is not particularly limited, and it can be coated (carried) by a well-known method. For example, firstly catalyst slurry containing a prescribed catalyst is prepared. Then, when making the catalyst slurry flow in the residual cells 2b in which both end portions are opened, such method as dipping or suction is preferably employed. The catalyst slurry is preferably coated on the whole surface of the partition walls in the cells.

After making the catalyst slurry flow in the cells, excess slurry is preferably blown away with compressed air. After that, the honeycomb catalyst body coated (carried) with the catalyst on the partition wall surface in the cells is preferably obtained by drying and baking the catalyst. The drying condition is preferably set to 80 to 150°C and 1 to 6 hours. The baking condition is preferably set to 450 to 700°C and 0.5 to 6 hours.

As the catalyst, an oxidation catalyst for purifying diesel engine exhaust gas can be mentioned. The oxidation catalyst for purifying diesel engine exhaust gas contains noble metal. As the noble metal, one or more kinds selected from the group consisting of Pt, Rh and Pd are preferable. The noble metal is preferably incorporated in the catalyst slurry so that the total amount of the metal is 0.17 to 7.07 g per the volume 1 litter of the honeycomb catalyst body. Incidentally, it may be used with an SCR catalyst for selectively reducing NOx or a NOx storage catalyst in combination.

As the SCR catalyst for selectively reducing NOx, one containing at least one kind selected from the group consisting of metal-substituted zeolite, vanadium, titania, tungsten oxide, silver and alumina can be mentioned. As the NOx storage catalyst, alkali metal and/or alkali earth metal, and the like can be mentioned. As the alkali metal, K, Na, Li and the like can be mentioned. As the alkali earth metal, Ca can be mentioned. K, Na, Li and Ca are preferably incorporated in the catalyst slurry so that the total amount is 5 g or more per the volume 1 litter of the honeycomb catalyst body.

As the other component than the catalyst incorporated in the catalyst slurry, alumina or the like is mentioned.

In the obtained honeycomb catalyst body 20, the honeycomb basal body 12 retains a honeycomb shape having the porous partition walls 3 mainly composed of ceramic to separate and form a plurality of cells 2 being the fluid flow passage. The average pore diameter of the partition walls 3 is preferably 5 to 30 µm, and more preferably 10 to 25 µm. When it is smaller than 5 µm, pressure loss occasionally increases even when the deposition of the particulate matters is small, and when it is larger than 30 µm, occasionally the honeycomb catalyst body 20 becomes brittle to be easily chipped, or the soot-collecting performance lowers. The average pore diameter of the partition walls 3 is a value measured with a mercury porosimeter.

The porosity of the partition walls 3 is preferably 30 to 70%, and more preferably 40 to 60% in point of the easiness of manufacturing. When it is smaller than 30%, the pressure loss occasionally increases, and when it is larger than 70%, the honeycomb catalyst body 20 occasionally becomes brittle to be easily chipped. The porosity of the partition walls 3 is a value measured with a mercury porosimeter.

The thickness of the partition walls 3 is preferably 0.20 to 0.50 mm, and more preferably 0.25 to 0.45 mm in point of the easiness of manufacturing. When it is thinner than 0.20 mm, the strength of the honeycomb catalyst body 20 occasionally lowers, and when it is thicker than 0.50 mm, the pressure loss when the exhaust gas passes through the cell occasionally becomes large. The thickness of the partition walls 3 is a value measured by a method of observing a cross-section in the axial direction with a microscope.

The cell density of a cross-section perpendicular to the central axis of the honeycomb catalyst body 20 (the honeycomb basal body 12) is preferably 0.9 to 93 cells/cm² (6 to 600 cpsi), and more preferably 7.8 to 62 cells/cm² (50 to 400 cpsi). When it is smaller than 0.9 cells/cm², the strength of the honeycomb catalyst body 20 occasionally lowers, and when it is larger than 93 cells/cm², the pressure loss occasionally becomes large.

The cell shape of the honeycomb catalyst body 20 is not particularly limited, but it is preferably polygonal such as triangular, square, pentagonal, hexagonal or octagonal, circular or elliptic, or, in addition, amorphous in the cross-section perpendicular to the central axis. The combination of a square shape and octagonal shape is also a preferable mode.

The honeycomb basal body 12 (the partition walls 3) contains ceramic as the main component. The material of the partition walls 3 is, specifically, preferably at least one kind selected from the group consisting of silicon carbide, a silicon-silicon carbide based composite material, cordierite, mullite, alumina, spinel, a silicon carbide-cordierite based composite material, lithium aluminum silicate and aluminum titanate. Among these, cordierite having a small thermal expansion coefficient and excellent thermal shock resistance is preferable. When saying "contains ceramic as the main component," it means that ceramic is contained in 90 mass% or more of the whole.

The outer shape of the honeycomb catalyst body 20 is not particularly limited, and tube-like shapes such as a cylinder, an elliptic tube or a tube of a polygonal bottom face including square and the like, and a tube-like shape having an amorphous bottom face can be mentioned. The size of the honeycomb catalyst body is not particularly limited, but the length in the central axis direction is preferably 40 to 500 mm. Further, for example, when the outer shape of the honeycomb catalyst body 20 is cylinder-like, the radius of the bottom face is preferably 50 to 500 mm.

In the honeycomb catalyst body 20, the first plugged portions 11 preferably have an average pore diameter of 0. 1 to 20 µm, and more preferably 1 to 15 µm. The average pore diameter larger than 20 µm occasionally leads to a state where the particulate matters penetrate into the pores and blocks the pores to increase the pressure loss. When the average pore diameter of the first plugged portions 11 is smaller than 0.1 µm, occasionally the exhaust gas hardly passes through the pores to increase the pressure loss. The average pore diameter of the first plugged portions 11 is a value measured with a mercury porosimeter.

The porosity of the first plugged portions 11 is preferably 30 to 60%, and more preferably 35 to 55%. When it is less than 30%, occasionally the pressure loss increases to lower the processing amount of the exhaust gas, and when it is more than 60%, there is such possibility that the first plugged portions 11 become brittle to be easily chipped, or that the strength lowers and crack tends to occur by thermal stress being generated in DPF regeneration. The porosity of the first plugged portions 11 is a value measured with a mercury porosimeter.

The length of the first plugged portions 11 in the extending direction of the cells (plugging depth) is preferably 1 to 15 mm, and more preferably 1 to 10 mm. When it is shorter (shallower) than 1 mm, the strength occasionally lowers. When it is longer (deeper) than 15 mm, the filtration area of the filter (the area of the partition walls capable of collecting the particulate matters) occasionally becomes small.

It is preferable that, in the honeycomb catalyst body 20, the prescribed cells 2a in which the first plugged portions 11 are formed in the one-endportion and the residual cells 2b in which both endportions are opened are alternately disposed to form a checked pattern of plugged cells and not plugged cells in the one-end face.

Further, the honeycomb catalyst body 20 may have an external wall lying at the most outer circumference thereof. Incidentally, the external wall is preferably a formed integral wall integrally formed with a porous basal body upon the forming, and a cement coated wall formed by grinding the outer circumference of the porous basal body after the forming to give a prescribed shape and forming the external wall from ceramic cement or the like is also a preferable mode.

### (1-2) Canning step:

The canning step is a step of housing the honeycomb catalyst body 20 and the second one side-plugged honeycomb structure 40 in a can 50, so that the "residual cells 2b in which both end portions are opened" in the honeycomb catalyst body 20 are arranged on the extension of the "prescribed cells 32a in which the second plugged portions 41 are formed" in the second one side-plugged honeycomb structure 40, and that the "prescribed cells 2a in which the first plugged portions 11 are formed" in the honeycomb catalyst body 20 are arranged on the extension of the "residual cells 32b in which both end portions are opened" in the second one side-plugged honeycomb structure 40, and in such a state that the end face (the other-end face 35) of the second one side-plugged honeycomb structure 40 is contacted closely to the other-end face 5 of the honeycomb catalyst body 20. This step can give an exhaust gas purification device 100. The exhaust gas purification device 100 has such a structure as blocking the other-end face 5 side of the residual cells 2b in the honeycomb catalyst body 20 with the second one side-plugged honeycomb structure 40. As described above, since the second one side-plugged honeycomb structure 40 is produced separately from the honeycomb catalyst body 20, the plugged portions of the second one side-plugged honeycomb structure 40 can be formed by being fired at a high firing temperature (higher than a temperature that deteriorates the catalyst). Consequently, the exhaust gas purification device 100 having plugged portions formed which are excellent in thermal resistance in both the honeycomb catalyst body 20 and the second one side-plugged honeycomb structure 40 can be manufactured.

The method of manufacturing the second one side-plugged honeycomb structure 40 used in the canning step is not particularly limited, but, for example, it is preferably produced in a manner below. That is, as shown in Fig. 2, it is preferable to form the second honeycomb formed body 31 having the partition walls 33 separating and forming a plurality of cells 32 which extend from one-end face 34 to the other-end face 35 and serve as the fluid flow passage by extrusion-forming, to fill up the second plugging materials in the opening portions of the prescribed cells 32a in the one-end face 34 of the second honeycomb formed body 31, and to fire the second honeycomb formed body 31 in which the second plugging materials are filled up, thereby forming the second one side-plugged honeycomb structure 40 having the second plugged portions 41 in the one-end face 34. It may also be possible to fire the second honeycomb formed body 31, which is then filled up with the second plugging members and further fired.

The method of extrusion-forming the second honeycomb formed body 31 is not particularly limited, but, for example, the method mentioned as the preferable method of extrusion-forming the first honeycomb formed body 1 is preferable.

A raw forming material is preferably one prepared by adding a dispersion medium and an additive to a raw ceramic material. As the additive, an organic binder, a pore former, surfactant or the like can be mentioned. As the dispersion medium, water or the like can be mentioned.

The raw ceramic material is preferably at least one kind selected from the group consisting of silicon carbide, a silicon-silicon carbide based composite material, a cordierite forming raw material, mullite, alumina, spinel, a silicon carbide-cordierite based composite material, lithium aluminum silicate, aluminum titanate and iron-chromium-aluminum based alloy. Among these, silicon carbide or aluminum titanate is preferable. Further, setting a cordierite forming raw material as the raw ceramic material for forming the first honeycomb formed body, and setting silicon carbide or aluminum titanate as the raw ceramic material for forming the second honeycomb formed body 31 are preferable. This offers an advantage of improving the regeneration limit.

As the kind and the content of the organic binder, the pore former, the surfactant and the dispersion medium, those mentioned as preferable ones in the method of manufacturing the first honeycomb formed body 1 are preferable.

By adjusting the particle diameter and blending amount of the raw ceramic material (aggregate particles) to be used, and the particle diameter and blending amount of the pore former to be added, a porous basal body having an intended porosity and average pore diameter can be obtained.

Next, the second honeycomb formed body 31 may be dried. The drying method is not particularly limited, but the method mentioned as the preferable method in the method of manufacturing the first honeycomb formed body 1 is preferable.

Next, the second plugging materials are filled up in the opening portions of the prescribed cells 32a in the one-end face 34 of the second honeycomb formed body 31. The method of filling up the second plugging materials is not particularly limited, but the method mentioned as a preferable method in the method of manufacturing the first honeycomb formed body 1 is preferable. As the raw ceramic material, the same one as the raw ceramic material for use in forming the second honeycomb formed body 31 is preferable.

Next, drying the second honeycomb formed body 31 in which the second plugging materials are filled up in "the opening portions of the prescribed cells" in the one-end face 34 is preferable. The drying method is also not particularly limited, but the method mentioned as the preferable method in the method of manufacturing the second honeycomb formed body 31 is preferable.

Next, it is preferable to calcinate, prior to firing, the second honeycomb formed body 31 filled up with the second plugging materials in the opening portions of the prescribed cells 32a in the one-end face 34, and then to fire the same to give the second one side-plugged honeycomb structure. The method of the calcination and firing is not particularly limited, but the method mentioned as the preferable method in the method of manufacturing the first honeycomb formed body 1 is preferable. Incidentally, when the material of the second plugged portions is aluminum titanate, the firing temperature ispreferably 1350 to 1500°C, and more preferably 1400 to 1450°C. The firing time is preferably set to around 1 to 10 hours.

In the obtained second one side-plugged honeycomb structure 40, the honeycomb basal body 42 retains a honeycomb shape having the porous partition walls 33 containing ceramic as the main component to separate and form a plurality of cells 32 serving as a fluid flow passage. The average pore diameter of the partition walls 33 is preferably 5 to 30 µm, and more preferably 10 to 25 µm. When it is smaller than 5 µm, pressure loss occasionally increases even when the deposition of the particulate matters is small, and when it is larger than 30 µm, occasionally the second one side-plugged honeycomb structure 40 becomes brittle to be easily chipped, or the soot-collecting performance lowers. The average pore diameter of the partition walls 33 is a value measured with a mercury porosimeter.

The porosity of the partition walls 33 is preferably 30 to 70%, and more preferably 40 to 60% in point of the easiness of manufacturing. When it is smaller than 30%, the pressure loss occasionally increases, and when it is larger than 70%, the second one side-plugged honeycomb structure 40 occasionally becomes brittle to be easily chipped. The porosity of the partition walls 33 is a value measured with a mercury porosimeter.

The thickness of the partition walls 33 is preferably 0. 20 to 0.50 mm, and more preferably 0.25 to 0.45 mm in point of the easiness of manufacturing. When it is thinner than 0.20 mm, the strength of the second one side-plugged honeycomb structure 40 occasionally lowers, and when it is thicker than 0.50 mm, the pressure loss when the exhaust gas passes through the cells occasionally becomes large. The thickness of the partition walls 33 is a valued measured by a method of observing a cross-section in the axial direction with a microscope.

The cell density of a cross-section perpendicular to the central axis of the second one side-plugged honeycomb structure 40 (the honeycomb basal body 42) is preferably 0.9 to 93 cells/cm² (6 to 600 cpsi), and more preferably 7.8 to 62 cells/cm² (50 to 400 cpsi). When it is smaller than 0.9 cells/cm², the strength of the second one side-plugged honeycomb structure 40 occasionally lowers, and when it is larger than 93 cells/cm², the pressure loss occasionally becomes large.

The cell shape of the second one side-plugged honeycomb structure 40 is not particularly limited, but it is preferablypolygonal such as triangular, square, pentagonal, hexagonaloroctagonal, circularorelliptic, or, inaddition, amorphous in the cross-section perpendicular to the central axis. The combination of a square shape and octagonal shape is also a preferable mode.

The honeycomb basal body 42 (the partition walls 33) contains ceramic as the main component. The material of the partition walls 33 is, specifically, preferablyat least one kind selected from the group consisting of silicon carbide, a silicon-silicon carbide based composite material, cordierite, mullite, alumina, spinel, a silicon carbide-cordierite based composite material, lithium aluminum silicate and aluminum titanate. Among these, silicon carbide or aluminum titanate is preferable. The use of silicon carbide or aluminum titanate offers an advantage of improving the regeneration limit. Further, setting cordierite as the material of the honeycomb basal body 12 of the honeycomb catalyst body 20, and setting silicon carbide or aluminum titanate as the material of honeycomb basal body 42 of the second one side-plugged honeycomb structure 40 are preferable. This offers an advantage of actualizing weight saving and cost reduction. When saying "contains ceramic as the main component," it means that ceramic is contained in 90 mass% or more of the whole.

The outer shape of the second one side-plugged honeycomb structure 40 is not particularly limited, and tube-like shapes such as a cylinder, an elliptic tube or a tube of a polygonal bottom face including square and the like, and a tube-like shape having an amorphous bottom face can be mentioned. The size of the second one side-plugged honeycomb structure 40 is not particularly limited, but the length in the central axis direction is preferably 5 to 300 mm. Further, for example, when the outer shape of the second one side-plugged honeycomb structure 40 is cylinder-like, the radius of the bottom face is preferably 50 to 500 mm. Furthermore, the length of the second one side-plugged honeycomb structure 40 in the central axis direction is preferably 10 mm or more, and 40% or less relative to the total length in the central axis direction when the end face of the second one side-plugged honeycomb structure 40 is contacted closely to the other-end face 5 of the honeycomb catalyst body 20 (the length obtained by adding respective lengths of the honeycomb catalyst body 20 and the second one side-plugged honeycomb structure 40 in the central axis direction). Setting the length of the second one side-plugged honeycomb structure 40 in the central axis direction to the above length offers an advantage of making the canning easy.

In the second one side-plugged honeycomb structure 4 0, the second plugged portions 41 have preferably an average pore diameter of 0.1 to 20 µm, and more preferably 1 to 15 µm. The average pore diameter larger than 20 µm occasionally leads to a state where the particulate matters penetrate into the pores and blocks the pores to increase the pressure loss. When the average pore diameter of the second plugged portions 41 is smaller than 0.1 µm, occasionally the exhaust gas hardly passes through the pores to increase the pressure loss. The average pore diameter of the second plugged portions 41 is a value measured with a mercury porosimeter.

The porosity of the second plugged portions 41 is preferably 30 to 60%, and more preferably 35 to 55%. When it is less than 30%, occasionally the pressure loss increases to lower the processing amount of the exhaust gas, and when it is more than 60%, there is such possibility that the second plugged portions 41 become brittle to be easily chipped, or that the strength lowers and crack tends to occur by thermal stress being generated in DPF regeneration. The porosity of the second plugged portions 41 is a value measured with a mercury porosimeter.

The length of the second plugged portions 41 in the extending direction of the cells (plugging depth) is preferably 1 to 15 mm, and more preferably 1 to 10 mm. When it is shorter (shallower) than 1 mm, the strength occasionally lowers. When it is longer (deeper) than 15 mm, the filtration area of the filter (the area of the partition walls capable of collecting the particulate matters) occasionally becomes small.

It is preferable that, in the second one side-plugged honeycomb structure 40, the prescribed cells 32a in which the second plugged portions 41 are formed in the one-end face and the residual cells 32b in which both end portions are opened are alternately disposed to form a checked pattern of plugged cells and not plugged cells in the one-end face 34.

Further, the second one side-plugged honeycomb structure 40 may have an external wall lying at the most outer circumference thereof. Incidentally, the external wall is preferably a formed integral wall integrally formed with a porous basal body upon the forming, and a cement coated wall formed by grinding the outer circumference of the porous basal body after the forming to give a prescribed shape and forming the external wall from ceramic cement or the like is also a preferable mode.

In the method of manufacturing an exhaust gas purification device of the present method, the honeycomb catalyst body 20 and the second one side-plugged honeycomb structure 40 preferably have the same size and shape in respective cross-sections perpendicular to the central axis, and, furthermore, shapes of cross-sections perpendicular to the central axis of respective cells, thicknesses of respective partition walls, and respective cell densities are preferably the same.

In the canning step, by contacting the end face (the other-end face 35) of the second one side-plugged honeycomb structure 40 closely to the other-end face 5 of the honeycomb catalyst body 20 so that the "residual cells 2b in which both end portions are opened" in the honeycomb catalyst body 20 are arranged on the extension of the "prescribed cells 32a in which the second plugged portions 41 are formed" in the second one side-plugged honeycomb structure 40, and the "prescribed cells 2a in which the first plugged portions 11 are formed" in the honeycomb catalyst body 20 are arranged on the extension of the "residual cells 32b in which both end portions are opened" in the second one side-plugged honeycomb structure 40, as shown in Figs. 3A and 3B, a serial type honeycomb filter 101 including the honeycomb catalyst body 20 and the second one side-plugged honeycomb structure 40 connected in series is formed. Accordingly, in the canning step, the serial type honeycomb filter 101 is housed in the can 50 to form the exhaust gas purification device 100. The honeycomb catalyst body 20 and the second one side-plugged honeycomb structure 40 may be adhered with an adhesive or the like, or may be housed in the can without the adhesion with an adhesive or the like.

Further, when the end face of the second one side-plugged honeycomb structure 40 is contacted closely to the other-end face 5 of the honeycomb catalyst body 20, as shown in Fig. 5, the one-end face 34 of the second one side-plugged honeycomb structure 40 maybe contacted closely to the other-end face 5 of the honeycomb catalyst body 20. This offers such advantages that the temperature distribution at the regeneration of the honeycomb catalyst body and the second one-side plugged honeycomb structure may be changed, and that, even when displacement occurs at the contact face of the honeycomb catalyst body and the second one side-plugged honeycomb structure, gap between partition walls is hardly generated. Fig. 5 is a schematic view showing a cross-section parallel to the central axis, of the honeycomb catalyst body and the second one side-plugged honeycomb structure constituting an exhaust gas purification device manufactured by another reference method of manufacturing an exhaust gas purification device.

Moreover, when the one-end face 34 disposed second plugged portions 41 in the second one side-plugged honeycomb structure 40 is contacted closely to the other-end face 5 of the honeycomb catalyst body 20 in this way, as shown in Fig. 6, it is preferable to set the second one side-plugged honeycomb structure 40 to have protruding plugged portions 41a in which two or more second plugged portions 41 protrude outside from the one-end face 34, and, in the step of housing the honeycomb catalyst body 20 and the second one side-plugged honeycomb structure 40 in a can, to contact the end face (the one-end face 34) of the second one side-plugged honeycomb structure 40 closely to the other-end face 5 of the honeycomb catalyst body 20, in such a state that protruding portions 41b of the protruding plugged portions 41a in the second one side-plugged honeycomb structure 40 are inserted into the residual cells 2b in which both end portions are opened in the honeycomb catalyst body 20. Fig. 6 is a schematic view showing a cross-section parallel to the central axis, of the honeycomb catalyst body and the second one side-plugged honeycomb structure constituting an exhaust gas purification device manufactured by furthermore an embodiment of the method of manufacturing an exhaust gas purification device of the present invention.

The number of the second plugged portions 41 (the protruding plugged portions 41a) protruding outside from the one-end face 34 of the second one side-plugged honeycomb structure 40 is two or more, and preferably 2 to 4. A too many number of the protruding plugged portions 41a occasionally increase the pressure loss. As a method of forming the protruding plugged portions 41a, it may be protruded at the filling of the plugging materials, or a particulate plugging materials is produced and the particulate plugging materials may be inserted in the opening portions of the cells. The shape of the protruding plugged portions 41a is not particularly limited, and the shape of the protruding portions 41b may be any of a circular arc, a polygon such as a triangle or tetragon, and a shape having a tip concaved in a V- or U-like shape. The site tobe disposed may be any place on the end face, but an approximately even arrangement on concentric circles is favorable.

In the canning step, when the serial type honeycomb filter 101 is housed in the can 50 to produce the exhaust gas purification device 100, as shown in Fig. 4, it is preferable to dispose the one-end face 4 to which the first plugged portions 11 are disposed in the honeycomb catalyst body 20 on a can inlet side 52 of the can 50 through which an exhaust gas G inflows, and to dispose the one-end face 34 to which the second plugged portions 41 are disposed in the second one side-plugged honeycomb structure 40 on a can outlet side 53 of the can 50 through which the exhaust gas G outflows. This makes it possible to deposit the particulate matters contained in the exhaust gas G in the residual cells 2b opening on the one-end face 4 side of the honeycomb catalyst body 20. Then, the catalyst 21 carried in the residual cells 2b of the honeycomb catalyst body 20 makes it possible to accelerate the combustion and removal of deposited particulate matters.

Moreover, when the serial type honeycomb filter 101 is housed in the can 50, as shown in Fig. 4, the serial type honeycomb filter 101 in a state that the outer circumference is covered with a cushion material 51 is preferably housed in the can 50 in a compressed state. As the cushion material 51, a mat made from ceramic fiber or the like may be used, and the filter 101 may be housed by a well-known method (for example, JP-A-2007-77036).

The can 50 is not particularly limited, and one usually used for housing a ceramic honeycomb filter for purifying exhaust gas such as automobile exhaust gas can be used. As the material of the can 50, stainless steel or the like can be mentioned. The can 50 preferably has a size that allows the serial type honeycomb filter 101 in a state to be pressed in, in a state where the cushion material 51 is wound.

### (1-3) Further another reference method of manufacturing an exhaust gas purification device:

In further another reference method of manufacturing an exhaust gas purification device , as shown in Fig. 7, the honeycomb catalyst body 20 is set so that the other-end face 5 is a convexly or concavely curved surface, and the second one side-plugged honeycomb structure 40 is set so that the end face (the one-end face 34) to be contacted closely to the other-end face 5 of the honeycomb catalyst body 20 is a concavely or convexly curved surface in a shape complementary to the convexly or concavely curved surface of the other-end face 5 in the honeycomb catalyst body 20, and, when the end face (the one-end face 34) of the second one side-plugged honeycomb structure 40 is contacted closely to the other-end face 5 of the honeycomb catalyst body 20 in the step of housing the honeycomb catalyst body 20 and the second one side-plugged honeycomb structure 40 in a can, the other-end face 5 being the convexly or concavely curved surface in the honeycomb catalyst body 20 and the end face (the one-end face 34) being the concavely or convexly curved surface in the second one side-plugged honeycomb structure 40 are contacted closely so as to be closely contacted wholly. The constitution other than the aforementioned one is preferably the same as in reference methods described above. The constitution makes it easy to position the honeycomb catalyst body 20 and the second one side-plugged honeycomb structure 40 in the can, and can prevent the displacement in the can during the use. Fig. 7 is a schematic view showing a cross-section parallel to the central axis, of the honeycomb catalyst body and the second one side-plugged honeycomb structure constituting an exhaust gas purification device manufactured by further reference method.

The end face to be set to a concavely or convexly curved surface in the second one side-plugged honeycomb structure 40 may be either the one-end face 34 to which the second plugged portions 41 are disposed or the other-end face 35 to which no plugged portions are formed. The honeycomb catalyst body 20 shown in Fig. 7 has the other-end face 5 of a convexly curved surface, but it may be a concavely curved surface. In this case, the one-end face 34 in the second one side-plugged honeycomb structure 40 is preferably set to a convexly curved surface.

A method of forming a convex or concave end face in the honeycomb catalyst body 20 and second one side-plugged honeycomb structure 40 is not particularly limited, but a method by grinding is preferable.

The height H of the convexly curved surface in the honeycomb catalyst body 20 is preferably 0.5 to 20 mm, and more preferably 1 to 10 mm. Further, when the other-end face 5 of the honeycomb catalyst body 20 is concave, the depth of the concavely curved surface, too, is preferably in the same range as the height H of the convexly curved surface.

(1-4) In another reference method of manufacturing an exhaust gas purification device , as shown in Figs. 8A and 8B, in a cross-section perpendicular to the central axis in the honeycomb catalyst body 20, the area of the prescribed cells 2a to which the first plugged portions 11 are disposed is smaller than the area of the residual cells 2b in which both end portions are opened. Consequently, when particulate matters are deposited in the residual cells 2b in which both end portions are opened, the area of the partition walls on which particulate matters deposit becomes large to make it possible to collect many particulate matters, and to prevent the increase in the pressure loss caused by collecting particulate matters. In this reference method of manufacturing an exhaust gas purification device, the constitution other than the aforementioned one is preferably the same as in methods described above. Fig. 8A is a schematic view showing a cross-section perpendicular to the central axis, of the honeycomb catalyst body and the second one side-plugged honeycomb structure constituting an exhaust gas purification device manufactured by this reference method. Fig. 8B is a plan view schematically showing the one-end face of the honeycomb catalyst body constituting the exhaust gas purification device manufactured by another reference method of manufacturing an exhaust gas purification device. The honeycomb catalyst body 20 in Fig. 8A corresponds to the A-A' cross-section in Fig. 8B.

(1-5) As shown in Fig. 9, the method of manufacturing an exhaust gas purification device here described may further have the step of forming one side-plugged honeycomb structure, wherein: a plugged honeycomb formed body 61 provided with a honeycomb basal body 67 having partition walls 63 separating and forming a plurality of cells 62 which extend from one-end face 64 to the other-end face 65 and serve as a fluid flow passage, and with plugging materials 66 disposed to opening portions of prescribed cells 62 in the one-end face 64 of the honeycomb basal body 67 and to opening portions of residual cells 62 in the other-end face 65 of the honeycomb basal body 67 is fired to form a plugged honeycomb structure, and the plugged honeycomb structure is cut in a plane perpendicular to the central axis to form the first one side-plugged honeycomb structure 10 in which the first plugged portions 11 are formed only in one-end face 4 and the second one side-plugged honeycomb structure 40 in which the second plugged portions 41 are formed only in one-end face 34; or the plugged honeycomb formed body 61 provided with a honeycomb basal body 67 having the partition walls 63 separating and forming a plurality of cells 62 which extend from one-end face 64 to the other-end face 65 and serve as a fluid flow passage, and with plugging materials 66 disposed to the opening portions of the prescribed cells 62 in the one-end face 64 of the honeycomb basal body 67 and to the opening portions of the residual cells 62 in the other-end face 65 of the honeycomb basal body 67 is cut in a plane perpendicular to the central axis, the first one side-plugged honeycomb formed body in which the first plugging materials are disposed only to one-end face and the second one side-plugged honeycomb formed body in which the second plugging materials are disposed only to one-end face are formed, and the first one side-plugged honeycomb formed body and the second one side-plugged honeycomb formed body are fired, to form the first one side-plugged honeycomb structure 10 in which the first plugged portions 11 are formed only in one-end face 4 and the second one side-plugged honeycomb structure 40 in which the second plugged portions 41 are formed only in one-end face 34. In the method of manufacturing an exhaust gas purification device of the present embodiment, the same method as that in the above-described method of manufacturing an exhaust gas purification device of the present invention is preferably employed, except that the first one side-plugged honeycomb structure 10 and the second one side-plugged honeycomb structure 40 are produced by the above method. Fig. 9 is a schematic view showing a part of the manufacturing process in the furthermore another embodiment of the method of manufacturing an exhaust gas purification device of the present invention.

According to the present method of manufacturing an exhaust gas purification device, since the first one side-plugged honeycomb structure 10 and the second one side-plugged honeycomb structure 40 can be produced by one extrusion-forming, further improvement of production efficiency becomes possible. Moreover, since one plugged honeycomb structure (formed body) is cut to produce two honeycomb structures (formed bodies) and respective cut surfaces are contacted closely upon the canning, the positioning of the cells can easily be carried out.

A method of cutting the plugged honeycomb structure in a plane perpendicular to the central axis is not particularly limited, and a well-known method capable of cutting ceramic so as to give a cut surface in a flat shape can be employed.

A method of manufacturing the honeycomb basal body 67 constituting the plugged honeycomb structure is preferably set to the same method of manufacturing the honeycomb basal body 12 (see Fig. 1) constituting the honeycomb catalyst body. When the plugging materials 66 are filled up in the honeycomb basal body, it is preferable to fill up the plugging materials in both end faces of the honeycomb basal body using the same method as one used for filling up the plugging materials in the method of manufacturing the honeycomb catalyst body.

### (2) Exhaust gas purification device:

As shown in Fig. 4, in an exhaust gas purification device made by a method here described the device is provided with a honeycomb catalyst body 20 having a honeycomb basal body 12 having the porous partition walls 3 containing ceramic as the main component and separating and forming a plurality of cells 2 which extend from one-end face 4 to the other-end face 5 and serve as the fluid flow passage, the first plugged portions 11 disposed to the opening portions of the prescribed cells 2a in the one-end face 4 of the honeycomb basal body 12, and the catalyst 21 carried on the surface of the partition walls 3 in the residual cells 2b in which both end portions are opened; the second one side-plugged honeycomb structure 40 having the honeycomb basal body 42 having the porous partition walls 33 containing ceramic as the main component and separating and forming a plurality of cells 32 which extend from one-end face 34 to the other-end face 35 and serve as the fluid flow passage, and the second plugged portions 41 disposed to the opening portions of the prescribed cells 32a in the one-end face 34 of the honeycomb basal body 42; and the can 50 for housing the honeycomb catalyst body 20 and the second one side-plugged honeycomb structure 40. Then, the honeycomb catalyst body 20 and the second one side-plugged honeycomb structure 40 are housed in the can so that the residual cells 2b in which both end portions are opened in the honeycomb catalyst body 20 are arranged on the extension of the prescribed cells 32a in which the second plugged portions 41 are formed in the second one side-plugged honeycomb structure 40, and that the prescribed cells 2a in which the first plugged portions 11 are formed in the honeycomb catalyst body 20 are arranged on the extension of the residual cells 32b in which both end portions are opened in the second one-side plugged honeycomb structure 40, and in such a state that the end face (the other-end face 35) of the second one side-plugged honeycomb structure 40 is contacted closely to the other-end face 5 of the honeycomb catalyst body 20. To the other-end face 5 of the honeycomb catalyst body 20, the one-end face 34 of the second one side-plugged honeycomb structure 40 may be contacted closely.

### Examples

Hereinafter, the present invention is further specifically described on the basis of certain of the Examples described below, but the present invention is not limited to these Examples. Examples 12, 20, 23, 26 and 31 are examples of the invention, the remaining Examples are for reference.

### (Example 1)

To a cordierite forming raw material forming cordierite by firing, water and a binder were added, which was mixed, kneaded, and extrusion-formed to give a first honeycomb formed body having partition walls containing ceramic as the main component and separating and forming a plurality of cells which extend from one-end face to the other-end face and serve as a fluid flow passage.

Next, the first plugging materials were filled up in the opening portions of prescribed cells in the one-end face of the obtained first honeycomb formed body. When the plugging materials were filled up, in one-end face, cells in which the first plugged portions were formed and cells in which the first plugged portions were not formed were arranged to form a checkered pattern. The length of the first plugged portions was set to 3 mm.

The composition of the first plugging materials was set to the same as a cordierite forming raw material used for forming the first honeycomb formed body.

The first honeycomb formed body filled up with the first plugging materials was dried and, after that, fired at about 1420°C to give the first one side-plugged honeycomb structure having the first plugged portions in the one-end face.

Next, by making catalyst slurry flow in cells in which both end faces were opened from the one-end face side, on which the first plugged portions were formed, of the first one side-plugged honeycomb structure to coat the catalyst on the whole partition wall surface in cells in which both end faces were opened, to form a honeycomb catalyst body (honeycomb (A)). Further, after making the catalyst slurry flow in the cells, excess slurry was blown away with compressed air. Then, the catalyst was dried and baked to form a honeycomb catalyst body coated (carried) with the catalyst on the whole partition wall surface in the cells. The baking of the catalyst was carried out at 550°C. As the catalyst slurry, one prepared by stirring and mixing platinum (Pt), active alumina, ceria as an oxygen storage agent and purified water was used. The amount of the noble metal (Pt) was 2 g per 1 litter of the honeycomb structure. The coat amount of the catalyst slurry was 100 g per 1 litter of the honeycomb structure.

The partition walls of the obtained honeycomb catalyst body had a porosity of 50%, and an average pore diameter of 18 µm. The porosity and the average pore diameter were values measured with a mercury porosimeter. In addition, the obtained honeycomb catalyst body had a partition wall thickness of 300 µm, a cell density of about 46 cells/cm², had cells of a quadrate cross-sectional shape, and, further, had a cylindrical shape having a bottom face diameter of 152 mm and length of 145 mm.

Next, water and a binder were added to a cordierite forming raw material forming cordierite by firing, which was mixed, kneaded and extrusion-formed to give the second honeycomb formed body having partition walls containing ceramic as the main component and separating and forming a plurality of cells which extend from one-end face to the other-end face and serve as a fluid flow passage.

Next, the opening portions of a prescribed cells in the one-end face of the obtained second honeycomb formed body were filled up with the second plugging materials, and the second honeycomb formed body filled up with the second plugging materials were dried, and, after that, fired at about 1420°C to sinter the second plugging materials and the second honeycomb formed body, to form a second one side-plugged honeycomb structure (honeycomb (B)) having the second plugged portions in the one-end face. In the one-end face, cells in which the second plugged portions were formed and cells in which the secondpluggedportions were not formed were arranged to form a checkered pattern. The length of the second plugged portions was set to 3 mm.

As the composition of the second plugging materials, acordierite forming rawmaterial having the same composition as that used for forming the second honeycomb formed body was used.

The partition walls of the obtained second one side-plugged honeycomb structure had a porosity of 50%, and an average pore diameter of 18 µm. The porosity and the average pore diameter were values measured with a mercury porosimeter. The obtained second one side-plugged honeycomb structure had a partition wall thickness of 300 µm, a cell density of about 46 cells/cm², had cells of a quadrate cross-sectional shape, and, further, had a cylindrical shape having a bottom face diameter of 152 mm and length of 5 mm.

As the can for housing the honeycomb catalyst body and the second one side-plugged honeycomb structure, a tube made of stainless steel was used. One end portion of the can was pressed so that the diameter of a cross-section perpendicular to the central axis became 80 mm.

As a cushion material to be wound around the outer circumference of the honeycomb catalyst body and the second one side-plugged honeycomb structure when housing (canning) the honeycomb catalyst body and the second one side-plugged honeycomb structure in the can, a mat made from non-intumescent ceramic fiber was used.

The end face of the second one side-plugged honeycomb structure was contacted closely to the other-end face of the honeycomb catalyst body so that the residual cells in which both end portions were opened in the honeycomb catalyst body were arranged on the extension of the prescribed cells in which the second plugged portions were formed in the second one side-plugged honeycomb structure, and that the prescribed cells in which the first plugged portions were formed in the honeycomb catalyst body were arranged on the extension of the residual cells in which both end portions were opened in the second one side-plugged honeycomb structure, and, further, in such a state that a cushion material was wound around the outer circumference, the honeycomb catalyst body and the second one side-plugged honeycomb structure were thrust into a can to be housed in the can. To another end portion of the can, a pipe pressed so as to give a cross-section perpendicular to the central axis having a diameter of 80 mm was welded (the welded portion is not shown) to give an exhaust gas purification device having a structure shown in Fig. 4.

In the step of producing the exhaust gas purification device, "man-hour in the catalyst carrying" and "man-hour in the canning" were measured. Here, the "man-hour" means a time period necessary for the operation. Using the obtained exhaust gas purification device, "regeneration limit" and a "hot vibration test" were carried out. Results are shown in Table 1. In Tables 1 and 2, in the column of the "Man-hour in the catalyst carrying", a percentage relative to the "man-hour necessary for the catalyst carrying" in Comparative Example 1 is listed. In the column of "Man-hour in canning", a percentage relative to the "man-hour necessary for the canning" in Comparative Example 1 is listed. In the column of the "Regeneration limit", a percentage relative to the value of "regeneration limit" in Comparative Example 1 is listed. In the "hot vibration test", a case where the moving amount (shifted amount) of the "contacted surface between the honeycomb catalyst body and the second one side-plugged honeycomb structure" after 100 hours was less than 0.2 mm is denoted by "Excellent", a case where it was from 0.2 to 0.4 mm is denoted by "Good", and a case where it was from more than 0.4 to 0. 6 mm is denoted by "Acceptable". When a moving amount of the contacted surface after 100 hours is 0.6 mm or less, no problem occurs practically.

In columns of "Material of honeycomb (A) " and "Material of honeycomb (B)" in Tables 1 and 2, "CD" represents "cordierite", "AT" represents aluminum titanate, and "SiC" represents silicon carbide. In the column of "Cell shape of honeycombs (A), (B)", "square" represents that honeycombs (A) and (B) have a cell shape of square in a cross-section perpendicular to the central axis. Further, in the column of "Cell shape of honeycomb (A) (B)", "square + octagon" represents that a cross-section perpendicular to the central axis in the honeycombs (A) and (B) has a shape in which octagonal cells having a large area and square cells having a small area are arrangedalternately. In the case of "square + octagon", the area of cells having the octagonal cross-section was set to 1.8 times the area of cells having the square cross-section. In the column of "Connecting portion structure", "planar" represents that the shape of end face of the honeycomb catalyst body (the honeycomb (A)) contacting (connecting) closely to the second one side-plugged honeycomb structure (the honeycomb (B)) is planar (in this case, the shape of end face of the second one side-plugged honeycomb structure contacting closely to the honeycomb catalyst body is also planar). In the column of "Connecting portion structure", "unevenness: 1 mm" represents that the end face of the honeycomb catalyst body contacting closely to the second one side-plugged honeycomb structure has a convexly curved surface, and that the height H of the convexly curved surface (see Fig. 7) is 1 mm. Data different in the numerical part (1 mm) of the "unevenness: 1 mm" represents that the height H of the convexly curved surface is different. In the column of "Connecting portion structure", "protrusion 1.0 mm × 2" represents that two of the second plugged portions of the second one side-plugged honeycomb structure (the honeycomb (B)) are protruding plugged portions, and that the length of the protruding portion of the protruding plugged portions (length of the honeycomb (B) in the central axis direction) is 1.0 mm. Further, "protrusion 0.5 mm × 3" represents that three of the second plugged portions of the second one side-plugged honeycomb structure (the honeycomb (B)) are protruding plugged portions, and that the length of the protruding portion of the protruding plugged portions (length of the honeycomb (B) in the central axis direction) is 0.5 mm. In the column of "Honeycomb (B) plugging position", "outside" represents that the second plugged portions of the second one side-plugged honeycomb structure (the honeycomb (B)) is disposed, as an instance of the exhaust gas purification device shown in Fig. 4, to the end face on the side not contacting closely to the honeycomb catalyst body (the end face on the outside). In addition, in the column of "Honeycomb (B) pluggingposition", "inside" represents that the second plugged portions of the second one side-plugged honeycomb structure (the honeycomb (B)) is disposed, as the connecting state of the honeycomb catalyst body and the second one side-plugged honeycomb structure shown in Fig. 5, to the end face on the side contacting closely to the honeycomb catalyst body (the end face on the inside). Incidentally, in the case of a honeycomb structure(a honeycomb catalyst body) where a honeycomb structure to be disposed in the exhaust gas purification device is of an integrated type (a mode in which only one honeycomb structure houses in a can, instead of a mode in which two honeycomb structures are arranged), in the column of "Honeycomb (B) plugging position", "outside" represents that the plugged portions corresponding to the second plugged portions are formed in the end face of the honeycomb structure (the honeycomb catalyst body), and "inside" represents that the plugged portions corresponding to the second plugged portions are formed inside the honeycomb structure (the honeycomb catalyst body).

### (Regeneration limit)

While increasing the deposition amount of soot in the exhaust gas purification device, regeneration (combustion of soot) is carried out to confirm the limit at which crack occurs. Combustion gas containing soot generated by combusting diesel fuel (light oil) is made to flow in the exhaust gas purification device to deposit the soot. Then, after once cooling to room temperature, combustion gas containing oxygen in a certain percentage at 680°C is made to flow in the exhaust gas purification device, and, by decreasing the flow amount of the combustion gas when the pressure loss of the honeycomb structure lowers, the soot is rapidly combusted, and subsequent presence or absence of crack appearance in the honeycomb catalyst body and the one side-plugged honeycomb structure is confirmed. The test is started when the deposition amount of the soot is 4 g per 1 litter of the total volume of the honeycomb catalyst body and the one side-plugged honeycomb structure (hereinafter, written as 4 g/litter, or the like), and is repeatedly carried out until the crack appearance is recognized while increasing the amount by 0.5 g/litter. The measurement was carried out for five samples (N = 5) and the average value was calculated.

### (hot vibration test)

Under a set condition of 900°C for inlet gas temperature, 50 G for vibration acceleration, and 200 Hz for vibration frequency, while making heated exhaust gas flow in the exhaust gas purification device, vibration by the exhaust gas was given in the axial direction of the honeycomb catalyst body and second one side-plugged honeycomb structure. The evaluation is denoted by "Excellent" when the movement amount (shifted amount) of the "contacted surface between the honeycomb catalyst body and the second one side-plugged honeycomb structure" after 100 hours is less than 0.2 mm, by "Good" when it is from 0.2 to 0.4 mm, and by "Acceptable" when it is from more than 0.4 to 0.6 mm. When the movement amount of the contacted surface after 100 hours is 0.6 mm or less, no problem occurs practically.

**Table 1**

| | Material of honeycomb (A) | Material of honeycomb (B) | Length of honeycomb (A) (mm) | Length of honeycomb (B) (mm) | Cell shape of honeycomb (A)(B) | Connecting portion structure | Plugging position of honeycomb (B) | Regeneration limit (%) | Hot vibration test | Man-hour in catalyst carrying (%) | Man-hour in canning (%) |
|---|---|---|---|---|---|---|---|---|---|---|---|
| Ex. 1 | CD | CD | 145 | 5 | Square | Planer | Outside | - | Acceptable | -35 | +6 |
| Ex.2 | CD | CD | 140 | 10 | Square | Planer | Outside | - | Good | -35 | +4 |
| Ex.3 | CD | CD | 90 | 60 | Square | Planer | Outside | - | Good | -35 | +4 |
| Ex.4 | CD | CD | 75 | 75 | Square | Planer | Outside | - | Good | -35 | +4 |
| Ex.5 | CD | CD | 60 | 90 | Square | Planer | Outside | - | Good | -35 | +4 |
| Ex. 6 | CD | CD | 140 | 10 | Square | Unevenness: 1 mm | Outside | - | Excellent | -31 | +1 |
| Ex.7 | CD | CD | 140 | 10 | Square + octagon | Unevenness: 1 mm | Outside | - | Excellent | -31 | +1 |
| Ex. 8 | CD | CD | 140 | 10 | Square + octagon | Unevenness: 1 mm | Inside | - | Excellent | -31 | +1 |
| Ex. 9 | CD | CD | 90 | 60 | Square | Unevenness: 10 mm | Outside | - | Excellent | -31 | +1 |
| Ex. 10 | CD | CD | 140 | 10 | Square | Protruding 1.0 mm × 2 | Outside | - | Excellent | -35 | +1 |
| Ex.11 | CD | CD | 90 | 60 | Square + octagon | Protruding 0.5 mm × 3 | Outside | - | Excellent | -35 | +1 |
| Ex.12* | CD | CD | 90 | 60 | Square + octagon | Protruding 0.5 mm × 3 | Inside | - | Excellent | -35 | +1 |
| Ex.13 | CD | SiC | 145 | 5 | Square | Unevenness: 1 mm | Outside | +5.2 | Excellent | -31 | +1 |
| Ex.14 | CD | SiC | 140 | 10 | Square | Planer | Outside | +10.1 | Good | -35 | +3 |
| Ex.15 | CD | SiC | 140 | 10 | Square + octagon | Planer | Outside | +13.5 | Good | -35 | +3 |
| Ex.16 | CD | SiC | 140 | 10 | Square | Unevenness: 1 mm | Outside | +11.5 | Excellent | -31 | +1 |
| Ex.17 | CD | SiC | 140 | 10 | Square + octagon | Unevenness: 10 mm | Inside | +13.5 | Excellent | -31 | +1 |
| Ex.18 | CD | SiC | 90 | 60 | Square | Unevenness: 10 mm | Outside | +25.9 | Excellent | -31 | +1 |

| | | | | | | | | | | | |
|---|---|---|---|---|---|---|---|---|---|---|---|
| * Example of the present invention. | | | | | | | | | | | |

**Table 2**

| | Material of honeycomb (A) | Material of honeycomb (B) | Length of honeycomb (A) (mm) | Length of honeycomb (B) (mm) | Cell shape of honeycomb (A)(B) | Connecting portion structure | Plugging position of honeycomb (B) | Regeneration limit (%) | Hot vibration test | Man-hour in catalyst carrying (%) | Man-hour in canning (%) |
|---|---|---|---|---|---|---|---|---|---|---|---|
| Ex. 19 | CD | SiC | 140 | 10 | Square | Protruding 1.0 mm × 2 | Outside | +10.3 | Excellent | -35 | +1 |
| Ex. 20* | CD | SiC | 140 | 10 | Square | Protruding 0.5 mm × 3 | Inside | +11.0 | Excellent | -35 | +1 |
| Ex. 21 | CD | SiC | 90 | 60 | Square + octagon | Protruding 0.5 mm × 3 | Outside | +25.2 | Excellent | -35 | +1 |
| Ex. 22 | CD | AT | 145 | 5 | Square | Planer | Outside | +4.0 | Acceptable | -35 | +6 |
| Ex. 23* | CD | AT | 140 | 10 | Square | Protruding 0.5 mm × 3 | Inside | +7.1 | Excellent | -35 | +1 |
| Ex. 24 | SiC | CD | 140 | 10 | Square + octagon | Planer | Outside | - | Good | -35 | +4 |
| Ex. 25 | SiC | CD | 140 | 10 | Square | Uneverness: 1 mm | Outside | - | Excellent | -31 | +1 |
| Ex. 26* | SiC | CD | 90 | 60 | Square | Protruding 0.5 mm × 3 | Inside | - | Excellent | -35 | +1 |
| Ex. 27 | SiC | SiC | 140 | 10 | Square | Protruding 1.0 mm × 2 | Outside | - | Excellent | -35 | +1 |
| Ex.28 | SiC | SiC | 90 | 60 | Square | Planer | Outside | - | Good | -35 | +4 |
| Ex. 29 | SiC | AT | 140 | 10 | Square | Protruding 0.5 mm × 3 | Outside | - | Excellent | -35 | +1 |
| Ex. 30 | AT | CD | 140 | 10 | Square | Uneverness: 1 mm | Inside | - | Excellent | -31 | +1 |
| Ex. 31* | AT | SiC | 140 | 10 | Square | Protruding 0.5 mm × 3 | Inside | - | Excellent | -35 | +1 |
| Ex. 32 | AT | AT | 90 | 60 | Square + octagon | Protruding 0.5 mm × 3 | Outside | - | Excellent | -35 | +1 |
| Comp. ex.1 | CD | - | 150 | - | Square | - | Outside | 0 | - | 0 | 0 |
| Comp. ex. 2 | CD | - | 150 | - | Square + octagon | - | Outside | 0 | - | 0 | 0 |
| Comp. ex. 3 | SiC | - | 150 | - | Square | - | Inside | - | - | 0 | 0 |
| Comp. ex. 4 | AT | - | 150 | - | Square + octagon | - | Inside | - | - | 0 | 0 |

| | | | | | | | | | | | |
|---|---|---|---|---|---|---|---|---|---|---|---|
| * Example of the present invention. | | | | | | | | | | | |

### (Examples 2 to 32)

Exhaust gas purification devices were produced in the substantially same manner as in Example 1, except for changing the material of the honeycomb (A), material of the honeycomb (B), length (mm) of the honeycomb (A), length (mm) of the honeycomb (B), cell shape of honeycombs (A) and (B), connecting portion structure and honeycomb (B) plugging position as shown in Tables 1 and 2, and except for setting the plugging materials to the same material as that of the honeycomb (Examples 2 to 32). Protruding plugging portions were evenly disposed on a circle having a diameter of about 100 mm concentric with the end face. In the same manner as in Example 1, in the process of producing the exhaust gas purification device, the "man-hour in catalyst carrying" and the "man-hour in canning" were measured. Using the obtained exhaust gas purification device, the "regeneration limit" and the "hot vibration test" were carried out. Results are shown in Tables 1 and 2.

### (Comparative Example 1)

To a cordierite forming raw material forming cordierite by firing, water and a binder were added, which was mixed, kneaded, and extrusion-formed to give a honeycomb formed body having partition walls containing ceramic as the main component and separating and forming a plurality of cells which extend from one-end face to the other-end face and serve as a fluid flow passage.

Next, the plugging materials were filled up in the opening portions of the prescribed cells in the one-end face of the obtained honeycomb formed body and in the opening portions of the residual cells in the other-end face. When the plugging materials were filled up, cells in which the plugging materials were filled up and cells in which the plugging materials were not filled up were arranged to form a checkered pattern in both end faces. A method of filling up the plugging materials was set to the same as the method of filling up the first plugging materials in Examples 1. The composition of the plugging materials was set to the same as the instance of the first plugging materials in Example 1.

Prior to firing, the honeycomb formed body in which the plugging materials were filled up was dried, which was then fired at about 1420°C to give a honeycomb structure.

Next, by making the catalyst slurry flow in cells opened at one-end face from the one-end face side of the honeycomb structure, the catalyst was coated on the whole partition wall surface in the cells opened at one-end face to produce a honeycomb catalyst body (a honeycomb (A)). When making the catalyst slurry flow in the cells, the catalyst slurry was made to flow in while sucking from the other-end face side. At this time, a fine catalyst and solvent component in the catalyst slurry permeated through the partition walls and flowed out from the other-end portion side. After that, the catalyst was dried and baked to give a honeycomb catalyst body. The baking temperature of the catalyst was set to 550°C. The catalyst slurry and the amount thereof were set to the same as in Example 1.

The partition walls of the obtained honeycomb catalyst body had a porosity of 50%, and an average pore diameter of 18 µm. The porosity and the average pore diameter are values measured with a mercury porosimeter. Additionally, the obtained honeycomb catalyst body had a partition wall thickness of 300 µm, a cell density of about 46 cells/cm², had cells of a quadrate cross-sectional shape, and, further, had a cylindrical shape having a bottom face diameter of 152 mm and length of 150 mm.

The obtained honeycomb catalyst body was housed in a can in such a state that a cushion material was wound around the outer circumference to produce an exhaust gas purification device. The can and the cushion material were set to the same as those in Example 1. In the same manner as in Example 1, in the process of producing the exhaust gas purification device, the "man-hour in the catalyst carrying" and the "man-hour in the canning" were measured. The obtained exhaust gas purification device was used to carry out the test of the "regeneration limit". Results are shown in Table 2. Incidentally, for Comparative Examples 1 to 4 in Table 2, the column of "Cell shape of honeycombs (A), (B)" represents "Cell shape of honeycomb (A)".

### (Comparative Examples 2 to 4)

Exhaust gas purification devices were produced in the substantially same manner as in Comparative Example 1, except for changing the material of the honeycomb (A), cell shape of the honeycomb (A) or (B), or plugging positions of the honeycomb (B) as shown in Table 2, and setting the plugging materials to the same material as that of the honeycomb (Comparative Examples 2 to 4). Incidentally, in Comparative Example 3 and Comparative Example 4, that a "honeycomb plugging position" is "inside" means that the position of the plugging is a position inside from the end face by 10 mm. In the same manner as in Example 1, in the process of producing the exhaust gas purification device, the "man-hour in the catalyst loading" and the "man-hour in the canning" were measured. Further, the exhaust gas purification device obtained in Comparative Example 2 was used to carry out the test of the "regeneration limit". Results are shown in Table 2.

From Tables 1 and 2, it is known that the man-hour in the catalyst carrying decreases in Examples 1 to 32 as compared with Comparative Example 1. It is also known that the man-hour in the canning is at most "+ 6%" in Examples 1 to 32, and that it is a level satisfactorily negligible and is approximately equal in Comparative Example 1. It is also known that exhaust gas purification devices obtained in Examples 1 to 32 show good results of the hot vibration test. It is also known that the durability (the result of the hot vibration test) of the exhaust gas purification device is improved by making the structure of the connecting portion (the structure of portions for contacting the honeycomb catalyst body and the second one side-plugged honeycomb structure closely) convexo-concave. It is also known that the man-hour in the canning decreases. It is also known that the protruding plugging improves the durability (the result of the hot vibration test) of the exhaust gas purification device. It is also known that the man-hour in the canning decreases.

When the length of the honeycomb (B) is less than 10 mm, the evaluation of the hot vibration test is "Acceptable" . Moreover, in this case, the man-hour in the canning is such relatively large value as "+ 6%". The use of cordierite for the honeycomb (A) and the use of aluminum titanate for the honeycomb (B) lead to the exhaust gas purification device having an excellent regeneration limit.

According to the method of manufacturing an exhaust gas purification device of the present invention, an exhaust gas purification device suitable for collecting and removing particulate matters in exhaust gas discharged from internal combustion engines such as an engine for automobiles, an engine for construction machines or a stationary engine for industrial machines, other burning appliances and the like can be manufactured.

### Description of the Reference Symbols

1: first honeycomb formed body, 2: cell, 2a: prescribed cell, 2b: residual cell, 3: partition wall, 4: one-end face, 5: other-end face, 10: first one side-plugged honeycomb structure, 11: first plugged portion, 12: honeycomb basal body, 20: honeycomb catalyst body, 21: catalyst, 31: second honeycomb formed body, 32: cell, 32a: prescribed cell, 32b: residual cell, 33: partition wall, 34: one-end face, 35: other-end face, 40: second one side-plugged honeycomb structure, 41: second plugged portion, 41a: protruding plugged portion, 41b: protruding portion, 42: honeycomb basal body, 50: can, 51: cushion material, 52: can inlet, 53: can outlet, 61: plugged honeycomb formed body, 62: cell, 63: partition wall, 64: one-end face, 65: other-end face, 66: plugging material, 67: honeycombbasalbody, 100: exhaust gas purification device, 101: serial type honeycomb filter, G: exhaust gas

## Claims

1. A method of manufacturing an exhaust gas purification device comprising the steps of:
(i) a forming step of forming a honeycomb catalyst body (20) by making catalyst slurry flow from a one-end face side (4) of a first one side-plugged honeycomb structure (10) provided with a honeycomb basal body (12) having a plurality of porous partition walls (3) containing ceramic as the main component and separating and forming a plurality of cells (2) which extend from the one-end face (4) to another-end face (5) and serve as fluid flow passages, and with a plurality of first plug portions (11) disposed to a plurality of opening portions of prescribed cells (2a) in the one-end face of the honeycomb basal body, so that the slurry flows into the residual cells (26) in which the first plug portions (11) are not formed and which are open at both end portions to coat a catalyst on the partition wall surface in the residual cells (2b); and
(ii) a housing step of housing the honeycomb catalyst body (2a) and a second one side-plugged honeycomb structure (40) in a can, the second one side-plugged honeycomb structure (40) being provided with a honeycomb basal body (42) having a plurality of porous partition walls (33) containing ceramic as the main component and separating and forming a plurality of cells (32) which extend from a one-end face (34) to another-end face (35) and serve as fluid flow passages, and with a plurality of second plug portions (41) disposed to a plurality of opening portions of prescribed cells (32a) in the one-end face (34) of the honeycomb basal body (42), so that the residual cells (2b) in the honeycomb catalyst body (20) are arranged on the extension of the prescribed cells (32a) in the second one side-plugged honeycomb structure (40), and that the prescribed cells (2a) in the honeycomb catalyst body (20) are arranged on the extension of the residual cells (32b) in which both end portions are openinthesecondoneside-pluggedhoneycombstructure (40), and in such a state that an end face (35) of the second one side-plugged honeycomb structure (40) is contacted closely to the other-end face (5) of the honeycomb catalyst body (20),
wherein two or more the second plug portions (41) of the second one side-plugged honeycomb structure (40) are protruding plug portions protruding from the one-end face (34) of the second honeycomb structure (40) to the outside, and
in the housing step (ii) the one-end face (34) of the second one side-plugged honeycomb structure (40) is contacted closely to the other-end face (5) of the honeycomb catalyst body (20) with insertion of the protruding parts (41a, 41b) of the protruding plug portions of the second one side-plugged honeycomb structure (40) into the residual cells (2b) of the honeycomb catalyst body (29).

2. The method of manufacturing an exhaust gas purification device according to claim 1, wherein the honeycomb catalyst body (20) has its other-end face (5) as a convexly or concavely curved surface, the second one side-plugged honeycomb structure (40) has its one-end face (34) as a concavely or convexly curved surface of a shape complementary to the convexly or concavely curved surface of the other-end face (5) of the honeycomb catalyst body (20), and
when the one-end face (34) of the second one side-plugged honeycomb structure (40) and the other-end face (5) of the honeycomb catalyst body (20) are contacted closely in the step (ii), the convexly or concavely curved surface of the other-end face (5) of the honeycomb catalyst body (20) is contacted closely to the concavely or convexly curved surface of the one-end face (35) of the second one side-plugged honeycomb structure so as to be wholly closely contacted.

3. The method of manufacturing an exhaust gas purification device according to claim 1 or 2, wherein the length of the second one side-plugged honeycomb structure (40) in the central axis direction is 10 mm or more, and is 40% or less relative to the total length in the central axis direction when the one-end face (35) of the second one side-plugged honeycomb structure (40) is contacted closely to the other-end face (5) of the honeycomb catalyst body (20).

4. The method of manufacturing an exhaust gas purification device according to any one of claims 1 to 3, wherein cordierite is used as the material of the honeycomb basal body of the honeycomb catalyst body (20), and SiC or aluminum titanate is used as the material of the honeycomb basal body of the secondone side-pluggedhoneycomb structure (40).

5. The method of manufacturing an exhaust gas purification device according to claim 1, further including the step of forming a one side-plugged honeycomb structure, wherein: a plugged honeycomb formed body provided with a honeycomb basal body having a plurality of partition walls separating and forming a plurality of cells which extend from a one-end face to another-end face and serve as a fluid flow passage, and with a plurality of plugging materials disposed to a plurality of opening portions of the prescribed cells in the one-end face of the honeycomb basal body and to a plurality of opening portions of the residual cells in the other-end face of the honeycomb basal body are fired to form a plugged honeycomb structure, and the plugged honeycomb structure is cut in a plane perpendicular to the central axis to form a first one side-plugged honeycomb structure in which a plurality of first plugged portions are formed only in a one-end face and a secondone side-plugged honeycomb structure in which a plurality of second plugged portions are formed only in a one-end face; or a plugged honeycomb formed body provided with a honeycomb basal body having a plurality of partition walls separating and forming a plurality of cells which extend from a one-end face to another-end face and serve as a fluid flow passage, and with a plurality of plugging materials disposed to the opening portions of the prescribed cells in the one-end face of the honeycomb basal body and to the opening portions of the residual cells in the other-end face of the honeycomb basal body is cut in a plane perpendicular to the central axis, a first one side-plugged honeycomb formed body in which a plurality of first plugging materials are disposed only to a one-end face and a second one side-plugged honeycomb formed body in which a plurality of second plugging material are disposed only to a one-end face are formed, and the first one side-plugged honeycomb formed body and the second one side-plugged honeycomb formed body are fired to form a first one side-plugged honeycomb structure in which a plurality of first plugged portions are formed only in a one-end face and a second one side-plugged honeycomb structure in which a plurality of second plugged portions are formed only in a one-end face.

## Patentansprüche

1. Verfahren zur Herstellung einer Abgasreinigungsvorrichtung, das folgende Schritte umfasst:
(i) einen Formschritt zur Ausbildung eines Wabenkatalysatorkörpers (20), indem Katalysatoraufschlämmung von der Seite einer Endfläche (4) einer ersten, an einer Seite verschlossenen Wabenstruktur (10) fließen gelassen wird, wobei die Wabenstruktur (10) mit einem Wabenbasiskörper (12) mit einer Vielzahl poröser Trennwände (3) bereitgestellt ist, die Keramik als Hauptkomponente enthalten und eine Vielzahl an Zellen (2) trennen und bilden, die sich von der einen Endfläche (4) zu der anderen Endfläche (5) erstrecken und als Fluiddurchflussdurchlässe dienen, wobei eine Vielzahl erster Verschlussabschnitte (11) an einer Vielzahl von Öffnungsabschnitten vorbestimmter Zellen (2a) an der einen Endfläche des Wabenbasiskörpers angeordnet ist, so dass die Aufschlämmung in die verbleibenden Zellen (2b) fließt, in denen die ersten Verschlussabschnitte (11) nicht ausgebildet sind und die an beiden Endabschnitten offen sind, um einen Katalysator auf die Trennwandoberfläche in den verbleibenden Zellen (2b) aufzubringen; und
(ii) einen Gehäuseaufnahmeschritt, bei dem der Wabenkatalysatorkörper (2a) und eine zweite, an einer Seite verschlossene Wabenstruktur (40) in einer Dose aufgenommen werden, wobei die zweite, an einer Seite verschlossene Wabenstruktur (40) mit einem Wabenbasiskörper (42) bereitgestellt ist, der eine Vielzahl poröser Trennwände (33) aufweist, die Keramik als Hauptkomponente enthalten und eine Vielzahl an Zellen (32) trennen und bilden, die sich von der einen Endfläche (34) zu der anderen Endfläche (35) erstrecken und als Fluiddurchflussdurchlässe dienen, wobei eine Vielzahl zweiter Verschlussabschnitte (41) an einer Vielzahl von Öffnungsabschnitten vorbestimmter Zellen (32a) an der einen Endfläche (34) des Wabenbasiskörpers (42) angeordnet ist, so dass die verbleibenden Zellen (2b) in dem Wabenkatalysatorkörper (20) in Verlängerung der vorbestimmten Zellen (32a) der zweiten, an einer Seite verschlossenen Wabenstruktur (40) angeordnet sind, und dass die vorbestimmten Zellen (2a) in dem Wabenkatalysatorkörper (20) auf der Verlängerung der verbleibenden Zellen (32b) angeordnet sind, bei welchen beide Endabschnitte in der zweiten, an einer Seite verschlossenen Wabenstruktur (40) offen sind, sowie derart, dass eine Endfläche (35) der zweiten, an einer Seite verschlossenen Wabenstruktur (40) in engem Kontakt mit der anderen Endfläche (5) des Wabenkatalysatorkörpers (20) steht,
worin zwei oder mehrere der zweiten Verschlussabschnitte (41) der zweiten, an einer Seite verschlossenen Wabenstruktur (40) vorstehende Verschlussabschnitte sind, die von der einen Endfläche (34) der zweiten Wabenstruktur (40) nach außen vorstehen und
worin in dem Gehäuseaufnahmeschritt (ii) die eine Endfläche (34) der zweiten, an einer Seite verschlossenen Wabenstruktur (40) in engen Kontakt mit der anderen Endfläche (5) des Wabenkatalysatorkörpers (20) gebracht wird, indem die vorstehenden Teile (41 a, 41 b) der vorstehenden Verschlussabschnitte der zweiten, an einer Seite verschlossenen Wabenstruktur (40) in die verbleibenden Zellen (2b) des Wabenkatalysatorkörpers (29) eingeführt werden.

2. Verfahren zur Herstellung einer Abgasreinigungsvorrichtung nach Anspruch 1, worin der Wabenkatalysatorkörper (20) die andere Endfläche (5) in Form einer konvex oder konkav gekrümmten Oberfläche aufweist, die zweite, an einer Seite verschlossene Wabenstruktur (40) ihre eine Endfläche (34) in Form einer konkav oder konvex gekrümmten Oberfläche komplementär zu der konvex oder konkav gekrümmten Oberfläche der anderen Endfläche (5) des Wabenkatalysatorkörpers (20) aufweist, und
wenn die eine Endfläche (34) der zweiten, an einer Seite verschlossenen Wabenstruktur (40) und die andere Endfläche (5) des Wabenkatalysatorkörpers (20) in Schritt (ii) in engen Kontakt gebracht werden, die konvex oder konkav gekrümmte Oberfläche der anderen Endfläche (5) des Wabenkatalysatorkörpers (20) in engen Kontakt mit der konkav oder konvex gekrümmten Oberfläche der einen Endfläche (35) der zweiten, an einem Ende verschlossenen Wabenstruktur gebracht wird, um vollständig in engem Kontakt zu stehen.

3. Verfahren zur Herstellung einer Abgasreinigungsvorrichtung nach Anspruch 1 oder 2, worin die Länge der zweiten, an einer Seite verschlossenen Wabenstruktur (40) in Richtung der Mittelachse 10 mm oder mehr beträgt und 40 % oder weniger der Gesamtlänge in Richtung der Mittelachse entspricht, wenn die eine Endfläche (35) der zweiten, an einer Seite verschlossenen Wabenstruktur (40) in engen Kontakt mit der anderen Endfläche (5) des Wabenkatalysatorkörpers (20) gebracht wird.

4. Verfahren zur Herstellung einer Abgasreinigungsvorrichtung nach einem der Ansprüche 1 bis 3, worin Cordierit als Material für den Wabenbasiskörper des Wabenkatalysatorkörpers (20) und SiC oder Aluminiumtitanat als Material für den Wabenbasiskörper der zweiten, an einer Seite verschlossenen Wabenstruktur (40) verwendet wird.

5. Verfahren zur Herstellung einer Abgasreinigungsvorrichtung nach Anspruch 1, ferner umfassend den Schritt des Ausbildens einer an einer Seite verschlossenen Wabenstruktur, worin: ein verschlossener Wabenformkörper, der mit einem Wabenbasiskörper, der eine Vielzahl an Trennwänden aufweist, die eine Vielzahl an Zellen trennen und bilden, die sich von einer Endfläche zu einer anderen Endfläche erstrecken und als Fluiddurchflussdurchlässe dienen, und mit einer Vielzahl an Verschlussmaterialien, die in einer Vielzahl an Öffnungsabschnitten der vorbestimmten Zellen in der einen Endfläche des Wabenbasiskörpers und in einer Vielzahl an Öffnungsabschnitten der verbleibenden Zellen in der anderen Endfläche des Wabenbasiskörpers bereitgestellt ist, gebrannt wird, um eine verschlossene Wabenstruktur zu bilden und die verschlossene Wabenstruktur in einer Ebene im rechten Winkel auf die Mittelachse zerschnitten wird, um eine erste, an einer Seite verschlossene Wabenstruktur, in der eine Vielzahl erster Verschlussabschnitte nur in einer Endfläche ausgebildet ist, und eine zweite, an einer Seite verschlossene Wabenstruktur zu bilden, in der eine Vielzahl zweiter Verschlussabschnitte nur in einer Endfläche ausgebildet ist; oder worin ein verschlossener Wabenformkörper, der mit einem Wabenbasiskörper, der eine Vielzahl an Trennwänden aufweist, die eine Vielzahl an Zellen trennen und bilden, die sich von einer Endfläche zu einer anderen Endfläche erstrecken und als Fluiddurchflussdurchlässe dienen, und mit einer Vielzahl an Verschlussmaterialien, die in einer Vielzahl an Öffnungsabschnitten der vorbestimmten Zellen in der einen Endfläche des Wabenbasiskörpers und in einer Vielzahl an Öffnungsabschnitten der verbleibenden Zellen in der anderen Endfläche des Wabenbasiskörpers bereitgestellt ist, in einer Ebene im rechten Winkel auf die Mittelachse zerschnitten wird in einen ersten, an einer Seite verschlossenen Wabenformkörper, in dem eine Vielzahl erster Verschlussmaterialien nur an einer Endfläche angeordnet ist, und einen zweiten, an einer Seite verschlossenen Wabenformkörper, in dem eine Vielzahl zweiter Verschlussmaterialien nur an einer Endfläche angeordnet ist, und worin der erste, an einer Seite verschlossene Wabenformkörper und der zweite, an einer Seite verschlossene Wabenformkörper gebrannt werden, um eine erste, an einer Seite verschlossene Wabenstruktur, in der eine Vielzahl erster Verschlussabschnitte nur an einer Endfläche ausgebildet ist, und eine zweite, an einer Seite verschlossene Wabenstruktur zu erzeugen, in der eine Vielzahl zweiter Verschlussabschnitte nur an einer Endfläche ausgebildet ist.

## Revendications

1. Procédé pour fabriquer un dispositif de purification de gaz d'échappement comprenant :
(i) une étape de formage consistant à former un corps de catalyseur en nid d'abeilles (20) en faisant s'écouler un résidu de catalyseur du côté d'une première face d'extrémité (4) d'une première structure en nid d'abeilles bouchée d'un côté (10) prévue avec un corps de base en nid d'abeilles (12) ayant une pluralité de parois de séparation poreuses (3) contenant de la céramique en tant que composant principal et séparer et former une pluralité d'alvéoles (2) qui s'étendent de la première face d'extrémité (4) à une autre face d'extrémité (5) et servent de passages d'écoulement de fluide, et avec une pluralité de premières parties de bouchon (11) disposées sur une pluralité de parties d'ouverture d'alvéoles (2a) prédéterminées dans la première face d'extrémité du corps de base en nid d'abeilles, de sorte que le résidu s'écoule dans les alvéoles (26) résiduelles dans lesquelles les premières parties de bouchon (11) ne sont pas formées et qui sont ouvertes au niveau des deux parties d'extrémité afin de recouvrir un catalyseur sur la surface de paroi de séparation dans les alvéoles (2b) résiduelles ; et
(ii) une étape de logement consistant à loger le corps de catalyseur en nid d'abeilles (2a) et une deuxième structure en nid d'abeilles bouchée d'un côté (40) dans une boîte métallique, la deuxième structure en nid d'abeilles bouchée d'un côté (40) étant prévue avec un corps de base en nid d'abeilles (42) ayant une pluralité de parois de séparation poreuses (33) contenant de la céramique en tant que composant principal et séparer et former une pluralité d'alvéoles (32) qui s'étendent à partir d'une première face d'extrémité (34) jusqu'à une autre face d'extrémité (35) et servent de passages d'écoulement de fluide, et avec une pluralité de deuxièmes parties de bouchon (41) disposées sur une pluralité de parties d'ouverture d'alvéoles (32a) prédéterminées dans la première face d'extrémité (34) du corps de base en nid d'abeilles (42), de sorte que les alvéoles (2b) résiduelles dans le corps de catalyseur en nid d'abeilles (20) sont agencées sur l'extension des alvéoles (32a) prédéterminées dans la deuxième structure en nid d'abeilles bouchée d'un côté (40), et de sorte que les alvéoles (2a) prédéterminées dans le corps de catalyseur en nid d'abeilles (20) sont agencées sur l'extension des alvéoles (32b) résiduelles dans lesquelles les deux parties d'extrémité s'ouvrent dans la deuxième structure en nid d'abeilles bouchée d'un côté (40), et dans un état tel qu'une face d'extrémité (35) de la deuxième structure en nid d'abeilles bouchée d'un côté (40) est uniquement en contact immédiat avec l'autre face d'extrémité (5) du corps de catalyseur en nid d'abeilles (20),
dans lequel deux deuxièmes parties de bouchon (41) ou plus de la deuxième structure en nid d'abeilles bouchée d'un côté (40) font saillie des parties de bouchon faisant saillie de la première face d'extrémité (34) de la deuxième structure en nid d'abeilles (40) jusqu'à l'extérieur, et
dans ladite étape de logement (ii), la première face d'extrémité (34) de la deuxième structure en nid d'abeilles bouchée d'un côté (40) est en contact immédiat avec l'autre face d'extrémité (5) du corps de catalyseur en nid d'abeilles (20) avec l'insertion des parties en saillie (41a, 41b) des parties de bouchon en saillie de la deuxième structure en nid d'abeilles bouchée d'un côté (40) dans les alvéoles (2b) résiduelles du corps de catalyseur en nid d'abeilles (29).

2. Procédé pour fabriquer un dispositif de purification de gaz d'échappement selon la revendication 1, dans lequel le corps de catalyseur en nid d'abeilles (20) a son autre face d'extrémité (5) en tant que surface incurvée de manière convexe ou concave, la deuxième structure en nid d'abeilles bouchée d'un côté (40) a sa première face d'extrémité (34) en tant que surface incurvée de manière concave ou convexe d'une forme complémentaire à la surface incurvée de manière convexe ou concave de l'autre face d'extrémité (5) du corps de catalyseur en nid d'abeilles (20), et
lorsque la première face d'extrémité (34) de la deuxième structure en nid d'abeilles bouchée d'un côté (40) et l'autre face d'extrémité (5) du corps de catalyseur en nid d'abeilles (20) sont en contact immédiat à l'étape (ii), la surface incurvée de manière convexe ou concave de l'autre face d'extrémité (5) du corps de catalyseur en nid d'abeilles (20) est en contact immédiat avec la surface incurvée de manière concave ou convexe de la première face d'extrémité (35) de la deuxième structure en nid d'abeilles bouchée d'un côté afin d'être complètement en contact immédiat.

3. Procédé pour fabriquer un dispositif de purification de gaz d'échappement selon la revendication 1 ou 2, dans lequel la longueur de la deuxième structure en nid d'abeilles bouchée d'un côté (40) dans la direction axiale centrale est de 10 mm ou plus, et représente 40% ou moins de la longueur totale dans la direction axiale centrale lorsque la première face d'extrémité (35) de la deuxième structure en nid d'abeilles bouchée d'un côté (40) est en contact immédiat avec l'autre face d'extrémité (5) du corps de catalyseur en nid d'abeilles (20).

4. Procédé pour fabriquer un dispositif de purification de gaz d'échappement selon l'une quelconque des revendications 1 à 3, dans lequel on utilise de la cordiérite en tant que matériau du corps de base en nid d'abeilles du corps de catalyseur en nid d'abeilles (20), et on utilise SiC ou du titanate d'aluminium en tant que matériau du corps de base en nid d'abeilles de la deuxième structure en nid d'abeilles bouchée d'un côté (40).

5. Procédé pour fabriquer un dispositif de purification de gaz d'échappement selon la revendication 1, comprenant en outre l'étape consistant à former une structure en nid d'abeilles bouchée d'un côté, dans lequel : un corps formé en nid d'abeilles bouché prévu avec un corps de base en nid d'abeilles ayant une pluralité de parois de séparation séparant et formant une pluralité d'alvéoles qui s'étendent d'une première face d'extrémité à une autre face d'extrémité et servent de passage d'écoulement de fluide, et avec une pluralité de matériaux obturants disposés sur une pluralité de parties d'ouverture des alvéoles prédéterminées dans la première face d'extrémité du corps de base en nid d'abeilles et une pluralité de parties d'ouverture des alvéoles résiduelles dans l'autre face d'extrémité du corps de base en nid d'abeilles sont cuites afin de former une structure en nid d'abeilles bouchée, et la structure en nid d'abeilles bouchée est coupée dans un plan perpendiculaire à l'axe central afin de former une première structure en nid d'abeilles bouchée d'un côté, dans laquelle une pluralité de premières parties bouchées sont formées uniquement dans une face d'extrémité et une deuxième structure en nid d'abeilles bouchée d'un côté dans laquelle une pluralité de deuxièmes parties bouchées est formée uniquement dans une face d'extrémité ; ou un corps formé en nid d'abeilles bouché prévu avec un corps de base en nid d'abeilles ayant une pluralité de parois de séparation séparant et formant une pluralité d'alvéoles qui s'étendent d'une face d'extrémité à une autre face d'extrémité et servent de passage d'écoulement de fluide, et avec une pluralité de matériaux obturants disposés sur les parties d'ouverture des alvéoles prédéterminées dans la face d'extrémité du corps de base en nid d'abeilles et sur les parties d'ouverture des alvéoles résiduelles dans l'autre face d'extrémité du corps de base en nid d'abeilles est coupé dans un plan perpendiculaire à l'axe central, un premier corps formé en nid d'abeilles bouché d'un côté dans lequel une pluralité de premiers matériaux obturants sont disposés uniquement sur une face d'extrémité et un deuxième corps formé en nid d'abeilles bouché d'un côté dans lequel une pluralité de deuxièmes matériaux obturants sont disposés uniquement sur une face d'extrémité, sont formés, et le premier corps formé en nid d'abeilles bouché d'un côté et le deuxième corps formé en nid d'abeilles bouché d'un côté sont cuits afin de former une première structure en nid d'abeilles bouchée d'un côté dans laquelle une pluralité de premières parties bouchées sont formées uniquement dans une face d'extrémité et une deuxième structure en nid d'abeilles bouchée d'un côté dans laquelle une pluralité de deuxièmes parties bouchées sont formées uniquement dans une face d'extrémité.
